# EUROPEAN PATENT APPLICATION

(11) **EP 4 679 746 A1**
(43) Date of publication of application: **14.01.2026**
(21) Application number: 25188502.6
(22) Date of filing: 09.07.2025
(51) Int. Cl.: H04L 1/00, H04W 84/12

(54) **SIGNAL FIELD DESIGN FOR EXTENDED LONG RANGE PHYSICAL LAYER (PHY) CONVERGENCE PROTOCOL DATA UNIT AND USER INFO FIELD DESIGN FOR NON-ELR PPDU IN 802.11BN**

(30) Priority: 10.07.2024 US 202463669497 P; 07.08.2024 US 202463680252 P
(71) Applicant: INTEL Corporation, Santa Clara, CA 95054 (US)
(72) Inventor: ALEXANDER, Danny, Neve Efraim Monoson (IL); FANG, Juan, Portland (US); GUREVITZ, Assaf, 4704345 Ramat Hasharon (IL); HUANG, Po-Kai, San Ramon, 94582 (US); LI, Qinghua, San Ramon, 94583 (US); VITURI, Shlomi, 6732925 Tel Aviv (IL)
(74) Representative: Viering, Jentschura & Partner mbB Patent- und Rechtsanwälte

(57) **Abstract**

This disclosure describes systems, methods, and devices related to Extended Range Communication. A device may generate, for transmission, a physical convergence protocol data unit, PPDU, for an enhanced long range, ELR, operation within an IEEE 802.11 network, wherein the PPDU comprises a 48-bit ELR signal, ELR-SIG, field comprising a first 24-bit part and a second 24-bit part, wherein the first part comprises a first cyclic redundancy check, CRC field; and provide the generated PPDU to a transceiver for transmission.

## Description

### TECHNICAL FIELD

This disclosure generally relates to systems and methods for wireless communications and, more particularly, to Signal field design for extended long range physical layer (PHY) convergence protocol data unit (PPDU) and user Info field design for non-ELR PPDU in 802.11bn.

### BACKGROUND

Wireless devices are becoming widely prevalent and are increasingly requesting access to wireless channels. The Institute of Electrical and Electronics Engineers (IEEE) has been developing one or more standards to enable Radio Local Area Networking (RLAN). Third Generation Partnership Project (3GPP) cellular technologies also started supporting RLAN with introduction of Licensed Assisted Access (LAA) technology with LTE and later extended to New Radio (NR-U) with 5G New Radio (NR).

### BRIEF DESCRIPTION OF THE DRAWINGS

FIG. 1 is a network diagram illustrating an example network environment for Extended Range Communication and/or ELR Signal Design, in accordance with one or more example embodiments of the present disclosure.
FIG. 2 shows an example of an ELR PPDU in accordance with various aspects described herein.
FIG. 3 shows an example illustration of RRU52.
FIG. 4 shows an example illustration of the shifting all of the four RRU52 as described in Option 1.
FIG. 5 shows an example illustration of the shifting all of the four RRU52 as described in Option 2.
FIG. 6 shows an example illustration of the shifting all of the four RRU52 as described in Option 3.
FIG. 7 shows an example illustration of a first UHR variant user Info Field referred to as Design 1.
FIG. 8 shows an example illustration of a second UHR variant user Info Field referred to as Design 2.
FIG. 9 shows an example illustration of a third UHR variant user Info Field referred to as Design 3.
FIG. 10 shows an example illustration of a fourth UHR variant user Info Field referred to as Design 4.
FIG. 11 shows an example illustration of non MU MIMO user info field design, referred to as Design 1 herein.
FIG. 12 shows an example illustration of non MU MIMO user info field design, referred to as Design 1 herein.
FIG. 13 shows an example illustration of a downlink case.
FIG. 14 shows an example illustration of an uplink case.
FIG. 15 illustrates a flow diagram of illustrative process 1500 for an ELR signal design system, in accordance with one or more example embodiments (e.g. extended range communication) of the present disclosure.
FIG. 16 illustrates a flow diagram of illustrative process 1600 for an Extended Range Communication system, in accordance with one or more example embodiments of the present disclosure.
FIG. 17 illustrates a functional diagram of an exemplary communication station that may be suitable for use as a user device, in accordance with one or more example embodiments of the present disclosure.
FIG. 18 illustrates a block diagram of an example machine upon which any of one or more techniques (e.g., methods) may be performed, in accordance with one or more example embodiments of the present disclosure.
FIG. 19 is a block diagram of a radio architecture in accordance with some examples.
FIG. 20 illustrates an example front-end module circuitry for use in the radio architecture of FIG. 19, in accordance with one or more example embodiments of the present disclosure.
FIG. 21 illustrates an example radio IC circuitry for use in the radio architecture of FIG. 19, in accordance with one or more example embodiments of the present disclosure.
FIG. 22 illustrates an example baseband processing circuitry for use in the radio architecture of FIG. 19, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Wi-Fi 8 (IEEE 802.11bn or ultra high reliability (UHR)) is the next generation of Wi-Fi and a successor to the IEEE 802.11be (Wi-Fi 7) standard. In line with all previous Wi-Fi standards, Wi-Fi 8 will aim to improve wireless performance in general along with introducing new and innovative features to further advance Wi-Fi technology.

Extended long range (ELR) was being discussed as one of the main 802.11bn features to improve the transmission range. "Enhanced long range (ELR)" as used herein refers to the technology that was also known as "Extended long range (ELR)" during its development and standardisation within the framework of IEEE 802.11.

Example embodiments of the present disclosure relate to systems, methods, and devices for signal field design for extended long range PPDU and user Info field design for non-ELR PPDU in 802.11bn.

In one embodiment, an Extended Range Communication system may facilitate designs on several fields including extended long range signal (ELR-SIG) field and ELR-mark field for the ELR physical layer (PHY) convergence protocol data unit (PPDU), also the user info field design in ultra high reliability signal (UHR-SIG) for the non ELR PPDU.

In one or more embodiments, an ELR signal design system may facilitate designs on several fields including ELR-SIG field and ELR-mark field for the ELR PPDU.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

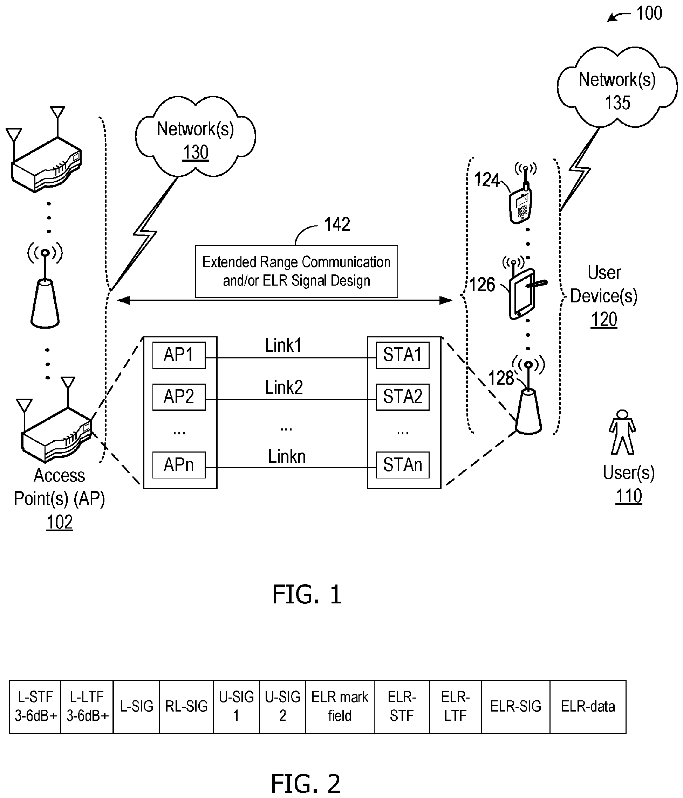

FIG. 1 is a network diagram illustrating an example network environment of Extended Range Communication and/or ELR Signal Design, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

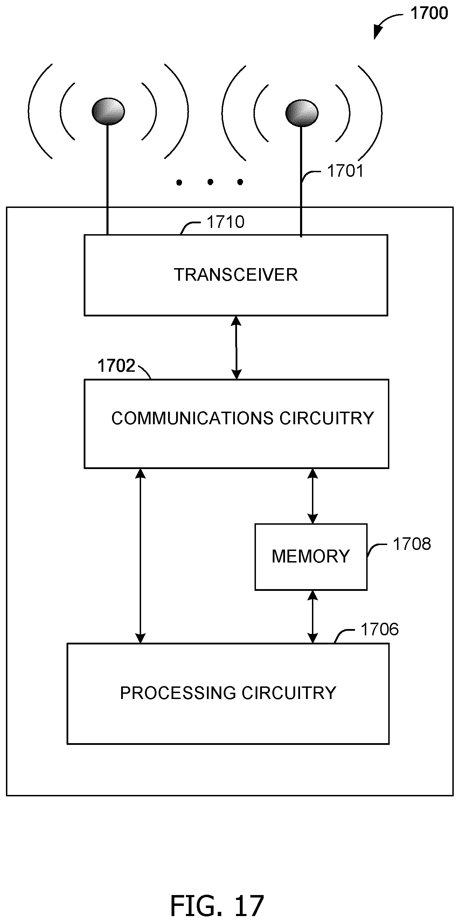

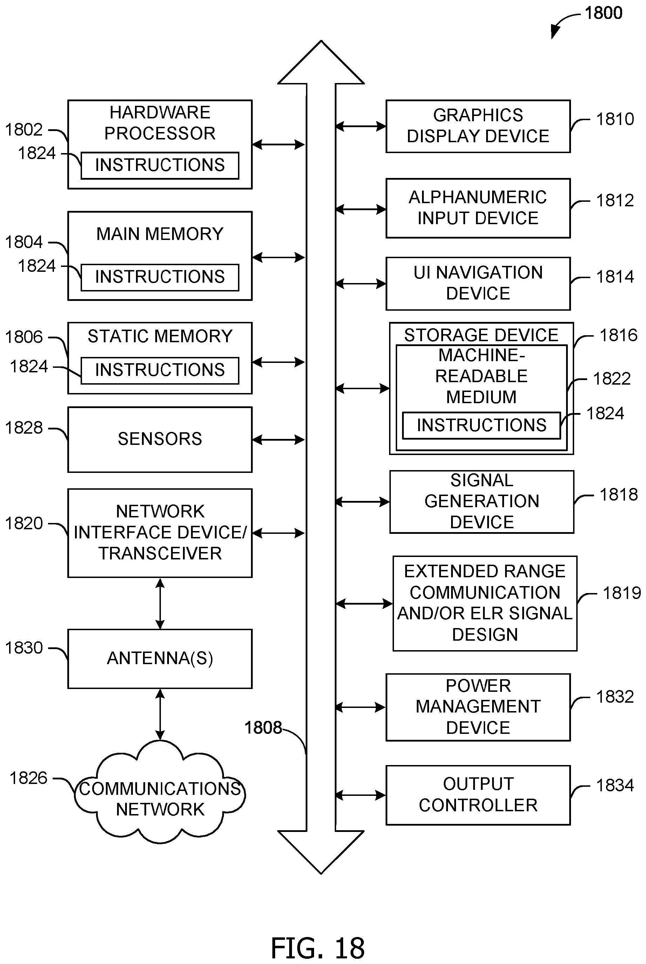

In some embodiments, the user devices 120 and the AP 102 may include one or more computer systems similar to that of the functional diagram of FIG. 17 and/or the example machine/system of FIG. 18.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, 802.11bn, etc.), 6 GHz channels (e.g., 802.11ax, 802.11be, 802.11bn, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement an Extended Range Communication 142 with one or more user devices 120 and/or an ELR Signal Design 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for the purposes of illustration and are not meant to be limiting.

Extended long range (ELR) was being discussed as one of the main 802.11bn features to improve the transmission range.

FIG. 2 shows an example of an ELR PPDU in accordance with various aspects described herein.

Several ELR-SIGNAL field designs are proposed herein for the ELR PPDU, which is after the ELR-LTF as shown in FIG. 2.

### ELR SIGNAL DESIGN

The ELR-SIG field may be transmitted with MCS0 with four times' duplication in frequency domain in 20MHz. BCC with ½ rate is the encoding scheme, the same as 802.11a/n/ac. ELR-SIG may include the following fields:
1) PHY Version Identifier: Differentiate between different PHY clauses.
   Example with 2-bit:
   Set to 0 for UHR ELR
   Values 1-3 are Validate
2) Bandwidth:
   Examples with 2-bit:
   Set to 0 for 20MHz.
   Set to 1 for 40MHz.
   Set to 2 for 80MHz.
   Set to 3 for 160MHz.
   In one embodiment, this field may not be needed in ELR-SIG because ELR may only be used with 20 MHz bandwidth.
3) UL/DL:
   Indicates whether the PPDU is sent in UL or DL. Set to the TXVECTOR parameter UPLINK_FLAG.
      - A value of 1 indicates the PPDU is addressed to an AP.
      - A value of 0 indicates the PPDU is addressed to a non-AP ST
   STA may stop the reception of the PPDU after realizing the PPDU is an uplink PPDU from another STA. This helps to reduce power consumption.
4) BSS Color: An identifier of the BSS
   In one embodiment, this field may not be needed in ELR-SIG because the BSS color may be indicated in ELR-mark. Because the BSS color indication in ELR-mark may not be reliable enough or it only indicates part of the BSS color, a complete 6-bit BSS color or a partial BSS color may be indicated in ELR-SIG.
5) TXOP
6) MCS
   Example of 2-bit:
   - Set to 0 for ELR-MCSO(BPSK, 1/2);
   - Set to 1 for ELR-MCS1(QPSK, 1/2);
   - Set to 2 for ELR-MCS3(16QAM, 1/2);
   - 3 for reserved
   In one embodiment, 1 bit for two MCSs may be enough because 16QAM is not quite useful for ELR.
7) STA-ID
8) Coding
9) set to 0 for BCC and 1 for
10)LDPC extra symbol or LDPC extra symbol segment if A factor is used. Because each ELR OFDM symbol only carries 24-48 information bits, there may not be a need for this indication for the LDPC extra symbol. This bit may be a reserved bit. Or, this indication may be used for indicating multiple LDPC extra symbols instead of one symbol, e.g., 2 or 4 symbols, because adding one OFDM doesn't mitigate the over puncturing or over shortening effect of the rate matching. In the best mode, this bit may not be needed.
11) A factor
   it may not be used to reduce the signaling bits.
12) LENGTH field
13) CRC
14) Tail
15) Disregard or Validate
16) Reserved bit(s)

Design Examples include: a) the number of OFDM symbols for ELR-SIG, i.e., one OFDM symbol or two OFDM symbols, and b) the individual/joint encoding structure of the two OFDM symbols.

Design 1: ELR SIG filed is one OFDM symbol carrying the following 24-bit information:

| | | | | | | | |
|---|---|---|---|---|---|---|---|
| ELR-SIG | B0 | B1 | B2 | B3 | B4-B13 | B14-B17 | B18-B23 |
| | UL/DL | MCS | Coding | LDPC extra symbol | LENGTH | CRC | Tail |

The Descriptions of UL/DL, CRC and Tail may be the same as that defined in Table 36-28 of Draft P802.11be_D4.0, as also described herein.

B1: MCS, indicates the MCS used for the modulating the ELR-DATA,

### Example parameters:

Set to 0 for ELR-MCSO(BPSK, 1/2);
Set to 1 for ELR-MCS1(QPSK, 1/2);

B2: coding, indicate BCC or LDPC, 2xLDPC may not be used in ELR. Maybe only BCC or only LDPC will be used or ELR-DATA, B2 will be used combined with B1 for more MCS parameters,
B3: LDPC extra symbol indication if LDPC is used for the ELR-DATA. Because each OFDM symbol only carries 24-48 information bits, there may not be a need for this indication for the LDPC extra symbol. This bit may be a reserved bit. Or this indication for the LDPC extra symbols instead of one symbols may be used, e.g., 2 or 4 symbols.

B4-B13: LENGTH Field maybe defined as that in LENGTH field in L-SIG or defined in terms of number of OFDM symbols or defined in terms of the number of K bytes, e.g., K=3, because the number of information bits carried by each ELR OFDM symbol is a multiple of 24 bits. It may can reduce to be 8 or 9-bit and keep the rest bits to be reserved or used for other field such as MCS to add more MCS parameters or bandwidth indication or PHY version identifier. Because the PPDU duration is limited to 5 milliseconds, the number of OFDM symbols can be sent is between 256 and 512, 8 or 9 bits are enough for the LENGTH field.

The benefit of the design 1 is that the receiver can based on the UL/DL, BSS Color from ELR-mark field before ELR-STF, MCS and LEGNTH fields to determine whether to continue decoding the next OFDM symbols or set NAV. For example, if the receiver (non-AP STA) decoded that UL/DL is UL, BSS Color is the same as the receiver's BSS color, the receiver will set the NAV to the end of the current ELR-PPDU and stop decoding the next OFDM symbol. if the receiver (non-AP STA) decoded that UL/DL is DL, BSS Color is the same as the receiver's BSS color, the receiver will continue decoding the following OFDM symbols. If the receiver (AP STA) decoded that UL/DL is UL, BSS Color is the same as the receiver's BSS color, the receiver will continue decoding the next OFDM symbols.

Design 2: if there is no BSS Color indication in ELR-mark before the ELR-STF or the reliability of the BSS Color indication in ELR-mark is low, ELR-SIG filed is two OFDM symbols carrying the following two parts with 48-bit information in total:

| | | | | | | |
|---|---|---|---|---|---|---|
| ELR-SIG-1 | B0 | B1-B6 | B7-B13 | B14-B17 | B18-B23 | |
| | UL/DL | BSS Color | TXOP | CRC | Tail | |
| ELR-SIG-2 | BO-B1 | B2 | B3 | B4-B 13 | B14-B17 | B18-B23 |
| | MCS | Coding | LDPC extra symbol | LENGTH | CRC | Tail |

Descriptions of UL/DL, BSS Color, TXOP, LDPC extra symbol, CRC and Tail may be the same as that defined in Table 36-28 of Draft P802.11be_D4.0, as also described herein.

B0-B1: MCS, indicates the MCS used for the modulating the ELR-DATA, Example parameters:
Set to 0 for ELR-MCSO(BPSK, 1/2);
Set to 1 for ELR-MCS1(QPSK, 1/2);
Set to 2 for ELR-MCS3(16QAM, 1/2);
3 for reserved
In one embodiment, 1 bit for two MCSs may be enough because 16QAM is not quite useful for ELR. B1 or B0 may be used as a reserved bit.

B2: coding, indicate BCC/LDPC, or legacy LDPC/2xLDPC in ELR. If one fixed coding method is used for the ELR-DATA, this field is not needed can be combined with B4-B13 for LENGTH field.

B4-B13: LENGTH Field maybe defined as that in LENGTH field in L-SIG or defined in terms of number of OFDM symbols or defined in terms of the number of K bytes, e.g., K=3, because the number of information bits carried by each ELR OFDM symbol is a multiple of 24 bits. It may be reduced to be 8 or 9-bit and keep the rest bits to be reserved or used for other fields such as MCS to add more MCS parameters or bandwidth indication.

Design 3: ELR SIG filed has two OFDM symbols carrying the following two parts with 48-bit information in total:

| | | | | | | | |
|---|---|---|---|---|---|---|---|
| ELR-SIG-1 | B0 | B1-B6 | B7-B13 | B14-B17 | B18-B23 | | |
| | UL/DL | BSS Color | TXOP | CRC | Tail | | |
| ELR-SIG-2 | B0 | B1 | B2 | B3-B4 | B5-B13 | B14-B17 | B18-B23 |
| | MCS | Coding | LDPC extra symbol | A factor | LENGTH | CRC | Tail |

Everything is the same as Design 2, the only difference is reducing the MCS field to be 1 bit and reducing the LENGTH filed to be 9-bit and using two bits for A factor, if no A factor concept is to be used for ELR-Data, these two bits can be reserved or used for other fields such as LENGTH field or bandwidth field.

B0: MCS, example parameters:
Set to 0 for ELR-MCSO(BPSK, 1/2);
Set to 1 for ELR-MCS1(QPSK, 1/2);

The benefit of the design 2 and design 3 with CRC and tail in the ELR-SIG-1 is that the receiver can based on the UL/DL, BSS Color and TXOP fields to determine whether to continue decoding the next OFDM symbols or set NAV. For example, if the receiver (non-AP STA) decoded that UL/DL is UL, BSS Color is the same as the receiver's BSS color, the receiver will set the NAV to the end of the TXOP and stop decoding the next OFDM symbol. if the receiver (non-AP STA) decoded that UL/DL is DL, BSS Color is the same as the receiver's BSS color, the receiver will continue decoding the following OFDM symbols. If the receiver (AP STA) decoded that UL/DL is UL, BSS Color is the same as the receiver's BSS color, the receiver will continue decoding the next OFDM symbols.

Design 4: ELR SIG filed is of two OFDM symbols carrying the following two parts with 48-bit information in total:

| | | | | | | | |
|---|---|---|---|---|---|---|---|
| ELR-SIG-1 | B0-B5 | B6-B12 | B13-B23 | | | | |
| | BSS Color | TXOP | STA-ID | | | | |
| ELR-SIG-2 | B0 | B1-B2 | B3 | B4 | B5-B13 | B14-B17 | B18-B23 |
| | UL/DL | MCS | Coding | LDPC extra symbol segment | LENGTH | CRC | Tail |

The descriptions of UL/DL, BSS Color, TXOP, LDPC extra symbol(s), CRC and Tail may be the same as that defined in Table 36-28 of Draft P802.11be_D4.0 and Draft P802.11me_D5.0.

B1-B2 in ELR-SIG2: MCS, indicates the MCS used for the modulating the ELR-DATA,

### Example parameters:

Set to 0 for ELR-MCSO(BPSK, 1/2);
Set to 1 for ELR-MCS1(QPSK, 1/2);
Set to 2 for ELR-MCS3(16-QAM, 1/2);
3 is reserved for other MCS.
In one embodiment, 1 bit for two MCSs may be enough because 16QAM is not quite useful for ELR. The unused bit may be used as a reserved bit.

B3: coding, indicate BCC/LDPC, or legacy LDPC/2xLDPC in ELR. If one fixed coding method is used for the ELR-DATA, this field is not needed can be reserved or combined with B5-B13 for LENGTH field or combined with one bit from LENGTH field used for Bandwidth field.

Design 5: ELR SIG filed is two OFDM symbols carrying the following two parts with 48-bit information in total:

| | | | | | | | |
|---|---|---|---|---|---|---|---|
| ELR-SIG-1 | B0-B5 | B6-B12 | B13-B23 | | | | |
| | BSS Color | TXOP | STA-ID | | | | |
| ELR-SIG-2 | B0 | B1 | B2 | B3 | B4-B13 | B14-B17 | B18-B23 |
| | UL/DL | MCS | Coding | LDPC extra symbol | LENGTH | CRC | Tail |

Everything is the same as Design 4, the only difference is reducing the MCS field to be 1 bit and increasing the LENGTH filed to be 10-bit, or reducing the MCS field to be 1 bit and reducing the LENGTH field to be 8-bit and use 2-bit for bandwidth Field, or reducing the MCS field to be 1 bit and removing the coding bit with LDPC only for the bandwidth field.
As shown below:

| | | | | | | | | |
|---|---|---|---|---|---|---|---|---|
| ELR-SIG-1 | B0-B5 | B6-B12 | B13-B23 | | | | | |
| | BSS Color | TXOP | STA-ID | | | | | |
| ELR-SIG-2 | B0 | B1 | B2 | B3 | B4-B5 | B6-B13 | B14-B17 | B18-B23 |
| | UL/DL | MCS | Coding | LDPC extra symbol | Bandwidth | LENGTH | CRC | Tail |

### B0:

MCS, example parameters:
Set to 0 for ELR-MCSO(BPSK, 1/2);
Set to 1 for ELR-MCS1(QPSK, 1/2);

Design 6: ELR SIG filed is two OFDM symbols carrying the following two parts with 48-bit information in total:

| | | | | | | |
|---|---|---|---|---|---|---|
| ELR-SIG-1 | B0-B1 | B2-B3 | B4 | B5 | B6-B12 | B13-B23 |
| | PHY Version Identifier | Bandwidth | UL/DL | Disregard or Validate | TXOP | STA-ID |
| ELR-SIG-2 | BO-B1 | B2 | B3 | B4-B 13 | B14-B17 | B18-B23 |
| | MCS | Coding | LDPC extra symbol | LENGTH | CRC | Tail |

Design 7: ELR SIG filed is two OFDM symbols carrying the following two parts with 48-bit information in total:

| | | | | | | |
|---|---|---|---|---|---|---|
| ELR-SIG-1 | B0-B1 | B2-B4 | B5 | B6-B12 | B13-B23 | |
| | PHY Version Identifier | Bandwidth | UL/DL | TXOP | STA-ID | |
| ELR-SIG-2 | BO-B1 | B2 | B3 | B4-B 13 | B14-B17 | B18-B23 |
| | MCS | Coding | LDPC extra symbol t | LENGTH | CRC | Tail |

Design 8: ELR SIG filed is two OFDM symbols carrying the following two parts with 48-bit information in total:

| | | | | | | | |
|---|---|---|---|---|---|---|---|
| ELR-SIG-1 | B0-B1 | B2-B3 | B4 | B5-B6 | B7-B13 | B14-B17 | B18-B23 |
| | PHY Version Identifier | Bandwidth | UL/DL | Disregard or Validate | TXOP | CRC | Tail |
| ELR-SIG-2 | BO-B1 | B2 | B3 | B4-B 13 | B14-B17 | B18-B23 | |
| | MCS | Coding | LDPC extra symbol | LENGTH | CRC | Tail | |

Design 9: ELR SIG filed is two OFDM symbols carrying the following two parts with 48-bit information in total:

| | | | | | | | |
|---|---|---|---|---|---|---|---|
| ELR-SIG-1 | B0-B1 | B2-B3 | B4 | B5-B6 | B7-B13 | B14-B17 | B18-B23 |
| | PHY Version Identifier | Bandwidth | UL/DL | MCS | TXOP | CRC | Tail |
| ELR-SIG-2 | B0 | B1 | B2-B3 | B4-B 13 | B14-B17 | B18-B23 | |
| | Coding | LDPC extra symbol | A Factor | LENGTH | CRC | Tail | |

### Design 10:

In several aforementioned designs with two OFDM symbols, the first OFDM symbol has its own CRC and tail bits such that the receiver can decode the first symbol individually without using the second OFDM symbol. If the receiver knows from the content of the first OFDM symbol that the PPDU is not intended for the receiver, the receiver can stop the reception to save power or start to catch another incoming PPDU. To serve the purpose, the first OFDM symbol doesn't need both the CRC and the tail bits. Namely, the first OFDM only needs to carry the tail bits for its individual encoding. The CRC validation of the content of the first OFDM symbol can be combined with the second OFDM symbol. More specifically, the CRC of the whole ELR-SIG is at the second OFDM symbol. The CRC validates the content in both OFDM symbols, which may not include the tail bits and the CRC bits themselves. In this design, there is a downside. The receiver may need to estimate how reliable the decoded bits of the first OFDM. If they are reliable, then the receiver may use the decoded bits to decide whether to stop the reception of the second OFDM symbol. For avoiding the unnecessary decoding of the second OFDM symbol, a scheme is as follows.

The first OFDM symbol carries ID information and tail bits. The tail bits may be of 6 bits for BCC. No CRC bits or only one parity bit is included in the first OFDM symbol. The ID information may include STA ID or AID, and/or BSS color. In addition to the ID information, TXOP information may be included in the first OFDM symbol so that the receiver can set the NAV without reading the second OFDM symbol. One design example of the first OFDM is as follows. The content of the first OFDM symbol includes 11 bits of STA ID or AID, 7 bits of TXOP duration, and 6 bits of BCC tail bits, whose total is 24 bits. If it is needed to squeeze AID (or STA ID), BSS color, and TXOP duration into the first OFDM symbol, the AID (or STA ID) and/or BSS color may be partial instead of complete, the remaining bits of AID and/or BS color may be included in the second OFDM symbol. The other bits of the ELR-SIG are similar to the aforementioned designs.

### Design 11:

To avoid the downside in Design 10, the CRC may be kept in the first OFDM symbol so that the receiver doesn't need to estimate the reliability of the decoded bits. To make room for the CRC, some AID bits need to be moved to the second OFDM symbol. Examples of the first OFDM symbol are as follows.

The content of the first OFDM symbol includes 7 bits of STA ID or AID, 7 bits of TXOP duration, 4 bits of CRC, and 6 bits of BCC tail bits, whose total is 24 bits. Another example is as follows. The content of the first OFDM symbol includes 6 bits of BSS color, 1 bit of DL/UL indication, 7 bits of TXOP duration, 4 bits of CRC, and 6 bits of BCC tail bits, whose total is 24 bits.

If it is needed to squeeze AID (or STA ID), BSS color, and TXOP duration, and/or DL/UL indication into the first OFDM symbol, the AID (or STA ID) and/or BSS color may be partial instead of complete, the remaining bits of AID and/or BS color may be included in the second OFDM symbol. The other bits of the ELR-SIG are similar to the aforementioned designs.

### Tone planning for ELR-DATA and pilot:

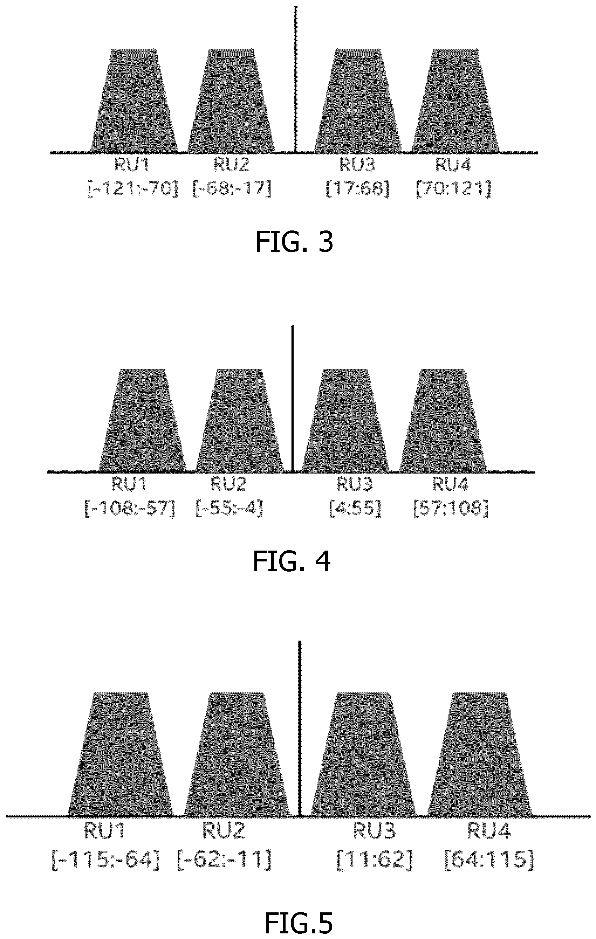

FIG. 3 shows an example illustration of RRU52 with four times duplication in frequency domain in 20MHz. RRU52 with four times duplication in frequency domain in 20MHz may be used for ELR-DATA transmission with the center RRU26 being empty.

To mitigate the out of band emissions, it was proposed to shift the four RRU52 close to the DC tones.

Option 1 for this shifting: shift all of the four RRU52 close to the DC tones by 13 tones as shown below with the pilot tones as: {-103 -89 -77 -63}, {-49 -35 -23 -9}, {9 23 35 49}, {63 77 89 103}. FIG. 4 shows an example illustration of the shifting all of the four RRU52 as described in Option 1.

Option 2 for this shifting: shift all of the four RRU52 close to the DC tones by 6 or 7 tones as shown below with the pilot tone as: {-110 -96 -84 -70}, {-56 -42 -30 -16}, {16 30 42 56}, {70 84 96 110} or {-109 -95 -83 -69} , {-55 -41 -29 -15}, {15 29 41 55}, {69 83 95 109}. FIG. 5 shows an example illustration of the shifting all of the four RRU52 as described in Option 2.

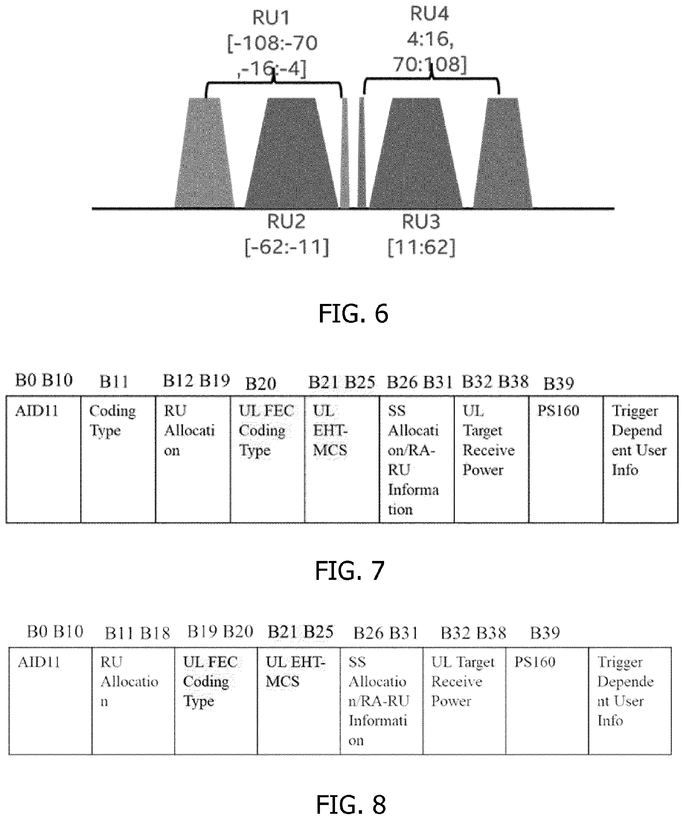

Option 3 for this shifting: replace the left side 13, 6 or 7 tones of the RRU52 RU1 as the left 13, 6 or 7 tones of RU5 or RRU26 and the right side 13, 6 or 7tone of the RRU52 RU4 as the right 13, 6 or 7tone of RU5 or RRU26 as shown below an example with the pilot tone as: {-102 -90 -76 -10} , {-62 -48 -36 -22}, {22 36 48 62}, {10 76 90 102}. FIG. 6 shows an example illustration of the shifting all of the four RRU52 as described in Option 3. The advantage of this tone plan is that there will not be a change to the RRU52 RU2 and RRU52 RU3 tone plan and reuse current RRU52 RU1 and RRU26 RU5 to get the new RRU52 RU1 by not assigning data over the tone -121:-109 in legacy RRU52 RU1 and tone 109:121 in legacy RRU52 RU4.

UHR variant user Info field design in the Trigger frame:
To keep backward compatible with HE or EHT variant user info field, the length of UHR variant user Info Field in a Trigger frame should be kept the same as that of Special User Info, HE Variant User Info, and EHT variant User Info field unless the Trigger frame is an MU-BAR Trigger frame. The Differentiate between different variant User Info Fields can be defined as following table:

| Common Info Field B54 | Common Info Field B55 | User Info field B39 | Presence of Special User Info Field | PHY version Identifier in Special User Info Field | User Info Field variant | TB PPDU type |
|---|---|---|---|---|---|---|
| 1 | 1 | 0 | No | | HE variant | HE |
| 0 | 0 | 0 | Yes | 0/1 | EHT/UHR variant | EHT/UHR |
| 0 | 0 | 1 | Yes | 0/1 | EHT/UHR variant | EHT/UHR |
| 1 | 0 | 1 | Yes | 0/1 | EHT/UHR variant | EHT/UHR |
| 1 | 0 | 0 | Yes | | HE variant | HE |

To support new MCSs, the reserved bit B25 will be combined with B21-B25 to indicate the existing MCS0-MC15 with the four additional MCSs (QPSK with coding rate of 2/3, 16QAM with coding rate of 2/3, 64QAM with coding rate of 5/6, and 256QAM with coding rate of 2/3).

On the other hand, to support per user based 2xLDPC, the AID 12 or the SS Allocation/RA-RU information field may be reduced by one bit for the 2xLDPC indication.

FIG. 7 shows an example illustration of a first UHR variant user Info Field referred to as Design 1.

In Design 1:
If B20=0, B11 is set to be 1 as validate bit and B20=0 with B11=0 is to be reserved
If B20=1, B11 is set to be 0 if legacy LDPC up to 1944 codeword length is used
If B20 =1, B11 is set to be 1 if new LDPC up to 3888 codeword length or LDPC with 3888 codeword length is used.

FIG. 8 shows an example illustration of a second UHR variant user Info Field referred to as Design 2.

In Design 2:
If B19=0, B20 is set to be 1 as validate bit and B19=0 with B20=0 is to be reserved
If B19=1, B20 is set to be 0 if legacy LDPC up to 1944 codeword length is used
If B19 =1, B20 is set to be 1 if new LDPC up to 3888 codeword length or LDPC with 3888 codeword length is used.

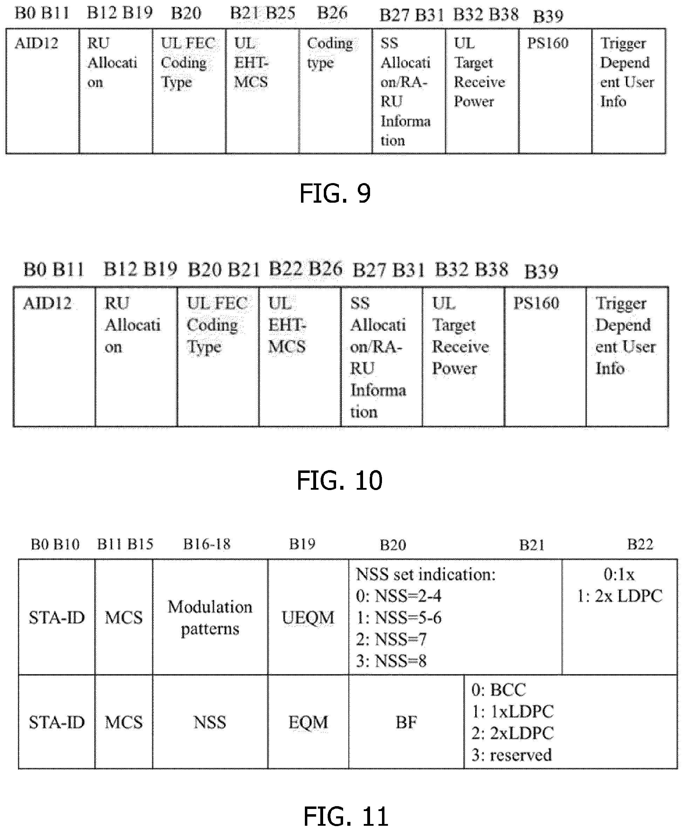

FIG. 9 shows an example illustration of a third UHR variant user Info Field referred to as Design 3.

In Design 3:
The SS Allocation/ RA-RU information field will be reduced by one bit and first bit B26 or last B31 will be used for the 2xLDPC indication.
If B20=0, B26/B31 is set to be 1 as validate bit and B20=0 with B26/B31 =0 is to be reserved.
If B20=1, B26/B31 is set to be 0 if legacy LDPC up to 1944 codeword length is used
If B20 =1, B26/B31 is set to be 1 if new LDPC up to 3888 codeword length or LDPC with 3888 codeword length is used.

FIG. 10 shows an example illustration of a fourth UHR variant user Info Field referred to as Design 4.

In Design 4:
If B20=0, B21 is set to be 1 as validate bit and B20=0 with B21 =0 is to be reserved
If B20=1, B21 is set to be 0 if legacy LDPC up to 1944 codeword length is used
If B20=1, B21 is set to be 1 if new LDPC up to 3888 codeword length or LDPC with 3888 codeword length is used.

### ELR-mark Field:

### Tow Repeated Symbols for ELR-Mark:

In FIG. 2, the ELR-mark is for the auto-classification of the ELR PPDU. In addition, it may indicate information about BSS color. Seen from simulation results, using two 1x duration OFDM symbols to indicate 6 bits of BSS color is not reliable at the target SNR, e.g., -10 dB. Two solutions are proposed. In the first solution, no BSS color is signaled in the ELR-mark field. The two 1x OFDM symbols may send the same signal, i.e., time-domain repetition, for the ease of auto-classification and timing estimation. One example is to send two L-LTF symbols with CP like the L-LTF field in the legacy portion of the ELR preamble. In the second solution, it may be possible to not signal all the 6 bits of BSS color for enhancing the reliability. For example, if only 1 BSS color bit is signaled, then one L-LTF symbol is sent in a positive phase and the other L-LTF symbol in the opposite phase. In general, 64 different (frequency-domain) sequences may be needed to signal the 6 bits of BSS color. For enhancing the reliability, it may be possible to reduce the number of sequences to 2 or 4 or 8 or 16 or 32. Some BSS color bits, e.g., 1 or 2, may be indicated by the phase rotation.

### Low PAPR Sequences for ELR-Mark:

Except the design using cyclically shifted L-LTF symbol, all the existing proposal use orthogonal BPSK sequences in frequency domain for signaling the BSS color in ELR-mark. However, it is challenging to find 64 sequences with low PAPR. It is proposed to use phase rotation to reduce the number of base low-PAPR sequences. Each of the base low-PAPR sequences cannot be converted from the other base sequences. Note that sequence *A* and sequence *e^{jθ}A* have the same PAPR. Namely, sequence *A* can be converted to another sequence *e^{jθ}A* with the same PAPR. It may be possible to let *θ* = 1, -1 to reduce the number of base low PAPR sequences by half. For example, 32 base sequences with low PAPR and low cross correlations among them maybe first found. Then, the 32 sequences with flipped phases of the 32 base sequences may be added to complete the 64 sequences. In other words, a good low-PAPR sequence set should include sequences with opposite phases. The idea can be generalized letting *θ =* 1*, j, -*1, *-j* such that it is possible to just need to find 16 low-PAPR base sequences and expand them to 64 by multiplying each of the 16 sequences with one of the four phase rotations. Besides phase rotation, reversing the order of the sequences also preserves the PAPR. It is possible to use reversions of the base sequences to reduce the number of low-PAPR base sequences.

Except the design using cyclically shifted L-LTF symbol, the existing proposal use orthogonal BPSK sequences in frequency domain for signaling the BSS color in ELR-mark. However, the orthogonality is unnecessary. It only helps in AWGN channel or channels with very little delay spread. In contrast, the PAPRs of sequences are much more important than the orthogonality for boosting the transmit signal. Therefore, it is desired that the sequences to signal the BSS color include non-orthogonal BPSK sequences or non-orthogonal QPSK sequences. The BPSK or QPSK is for the ease of implementation because they just need sign operation in generating the sequences.

### EXTENDED RANGE COMMUNICATION

Referring back to the ELR PPDU depicted in FIG. 2, the following aspects are further described:

In one or more embodiments, an Extended Range Communication system may add several more ELR-SIGNAL field designs for the ELR-PPDU and also the user info field design in UHR-SIG.

### ELR-SIG field design:

The ELR-SIG field may be transmitted with MCS0 with four times' duplication in frequency domain in 20MHz. Binary convolutional coding (BCC) with ½ rate is the encoding scheme, the same as 802.11a/n/ac. In an example, the modulation scheme of the encoded bits is BPSK with 4-time repetition.

As an alternative, the modulation scheme may be QPSK with 8-time repetition.

ELR-SIG may include the following fields:
1) PHY Version Identifier: Differentiate between different PHY versions. Example one with 2 bits:
   Set to 0 for UHR ELR
   Values 1-3 are reserved or for validation
   Example two with 1 bit:
      Set to 0 for UHR ELR
      Value 1 is reserved or for validation
2) Bandwidth:
   Examples with 2 bits:
   Set to 0 for 20MHz.
   Set to 1 for 40MHz.
   Set to 2 for 80MHz.
   Set to 3 for 160MHz.
   In one embodiment, this field may not be needed in ELR-SIG because ELR may only be used with 20 MHz bandwidth.
3) UL/DL:
   Indicates whether the PPDU is sent in UL or DL. Set to the TXVECTOR parameter UPLINK_FLAG.
   A value of 1 indicates the PPDU is addressed to an AP.
   A value of 0 indicates the PPDU is addressed to a non-AP ST STA may stop the reception of the PPDU after realizing the PPDU is an uplink PPDU from another STA. This helps to reduce the power consumption.
   In one embodiment, this field may not be needed in ELR-SIG because the receiver may read the partial AID or AID in ELR-SIG (if available) to identify unintended ELR PPDU.
4) BSS Color: An identifier of the BSS
   In one embodiment, this field may not be needed in ELR-SIG because the BSS color may be indicated in ELR-mark. Because the BSS color indication in ELR-mark may not be reliable enough or it only indicates part of the BSS color, a complete 6-bit BSS color or a partial BSS color may be indicated in ELR-SIG.
5) TXOP
6) MCS
   Example of 1-bit:
   Set to 0 for ELR-MCSO(BPSK, 1/2);
   Set to 1 for ELR-MCS1(QPSK, 1/2);
7) STA-ID or AID or partial AID
8) LENGTH field
9) More ELR PPDU bit: indicate whether it is the last ELR PPDU or not
10) CRC
11) Tail
12) Disregard or Validate
13) Reserved bit(s)

Proposal 1: Additional ELR-SIG design examples.

Design 1: ELR-SIG filed is of two OFDM symbols carrying the following 48-bit information:

| | | | | | | | |
|---|---|---|---|---|---|---|---|
| ELR-SIG-1 | B0-B1 | B2 | B3 | B4 | B5-B13 | B14-B17 | B18-B23 |
| | ELR-version | DL/UL | MCS | Coding | LENGTH | CRC | Tail |
| ELR-SIG-2 | B0-B10 | | | | B11-B13 | B14-B17 | B18-B23 |
| | AID | | | | Reserved | CRC | Tail |

The Descriptions of UL/DL, CRC and Tail may be the same as that defined in Table 36-28 of Draft P802.11be_D4.0, as also described herein.

### ELR-SIG-1:

B0-B1: PHY Version Identifier: Differentiate between different PHY clauses.
Example with 2-bit:
   Set to 0 for UHR ELR
   Values 1-3 are Validate
Example with 1-bit:
   Set to 0 for UHR ELR
   Values 1 is Validate. This bit can be set to 1 to indicate future PHY versions of ELR PPDU.

### B2: DL/UL

B3: MCS, indicates the MCS used for the modulating the ELR-DATA,

### Example parameters:

Set to 0 for ELR-MCSO(BPSK, 1/2);
Set to 1 for ELR-MCS1(QPSK, 1/2);

B4: coding, indicate BCC or LDPC, 2x LDPC may not be used in ELR. If 2x LDPC is also used by ELR, 2 bits instead of one may be used to indicate the coding scheme. The additional bit may be taken from the initial DL/UL field by removing the DL/UL bit or the ELR-version field by reducing the ELR-version field to be 1-bit.

B5-B13: LENGTH Field may be defined as that in LENGTH field in L-SIG or defined in terms of number of OFDM symbols or defined in terms of the number of K bytes, e.g., K=3, because the number of information bits carried by each ELR OFDM symbol is a multiple of 24 bits. It may can reduce to 8 bits and keep the rest bits to be reserved or used for other fields. Because the PPDU duration is limited to 5 milliseconds, the number of OFDM symbols can be sent is between 256 and 512, 8 or 9 bits are enough for the LENGTH field.
B14:B17: CRC
B18:B23: Tail
ELR-SIG-2:
B0-B10: AID
B11-B13: reserved
B14-B17: CRC
B18-B23: Tail

Design 2: ELR SIG filed is of two OFDM symbols carrying the following 48-bit information:

| | | | | | | |
|---|---|---|---|---|---|---|
| ELR-SIG-1 | B0 | B1 | B2 | B3-13 | B14-17 | B18-23 |
| | ELR-version | MCS | Coding | AID | CRC | Tail |
| ELR-SIG-2 | BO-B8 | | B9-B13 | | B14-17 | B18-23 |
| | LENGTH | | Reserved | | CRC | Tail |

### ELR-SIG-1:

B0: PHY Version Identifier: Differentiate between different PHY clauses. Example with 1-bit:
Set to 0 for UHR ELR
Values 1 is Validate

B1: MCS, indicates the MCS used for the modulating the ELR-DATA, Example parameters:
Set to 0 for ELR-MCSO(BPSK, 1/2);
Set to 1 for ELR-MCS1(QPSK, 1/2);

B2: coding, indicate BCC or LDPC, 2x LDPC may not be used in ELR.
B3-B13: AID.
B14:B17: CRC
B18:B23: Tail
ELR-SIG-2:
B0-B8: LENGTH field
B9-B13: reserved
B14-B17: CRC
B18-B23: Tail

Design 3: ELR SIG filed is of two OFDM symbols carrying the following 48-bit information with BSS color:

| | | | | | | | | |
|---|---|---|---|---|---|---|---|---|
| ELR-SIG-1 | B0 | B1 | B2 | B3 | B4-9 | B10-B13 | B 14-17 | B18-23 |
| | ELR-version | DL/UL | MCS | Coding | BSS color | Partial AID-1 | CRC | Tail |
| ELR-SIG-2 | B0-B4 | | | B5-B13 | | | B 14-17 | B18-23 |
| | Partial AID-2 | | | LENGTH | | | CRC | Tail |

### ELR-SIG-1:

B0: PHY Version Identifier: Differentiate between different PHY clauses. Example with 1-bit:
Set to 0 for UHR ELR
Values 1 is Validate
B1: DL/UL
B2: MCS, indicates the MCS used for the modulating the ELR-DATA, Example parameters:
   Set to 0 for ELR-MCSO(BPSK, 1/2);
   Set to 1 for ELR-MCS1(QPSK, 1/2);
B3: coding, indicate BCC or LDPC, 2x LDPC may not be used in ELR.
B4-B9: BSS color
B10-B13: Partial AID - part 1
B14:B17: CRC
B18:B23: Tail
ELR-SIG-2:
B0-B4: Partial AID - part 2
B5-B13: LENGTH field
B14-B17: CRC
B18-B23: Tail

Design 4: ELR SIG filed is of two OFDM symbols carrying the following 48-bit information with BSS color:

| | | | | | | | | |
|---|---|---|---|---|---|---|---|---|
| ELR-SIG-1 | B0 | B1 | B2 | B3 | B4-9 | B10-B13 | B 14-17 | B18-23 |
| | ELR-version | DL/UL | MCS | Coding | BSS color | LENGTH-1 | CRC | Tail |
| ELR-SIG-2 | B0-B4 | | | B5-B13 | | | B 14-17 | B18-23 |
| | LENGTH-2 | | | Partial AID | | | CRC | Tail |

### ELR-SIG-1:

B0: PHY Version Identifier: Differentiate between different PHY clauses. Example with 1-bit:
Set to 0 for UHR ELR
Values 1 is Validate

### B1: DL/UL

B2: MCS, indicates the MCS used for the modulating the ELR-DATA, Example parameters:
Set to 0 for ELR-MCSO(BPSK, 1/2);
Set to 1 for ELR-MCS1(QPSK, 1/2);

B3: coding, indicate BCC or LDPC, 2x LDPC may not be used in ELR.
B4-B9: BSS color
B10-B13: LENGTH-1, the first 4-bit of the LEGNTH field
B14:B17: CRC
B18:B23: Tail
ELR-SIG-2:
B0-B4: LENGTH-2, the last 5-bit of the LEGNTH field
B5-B13: Partial AID
B14-B17: CRC
B18-B23: Tail

Design 5: ELR SIG filed is of two OFDM symbols carrying the following 48-bit information with TXOP:

| | | | | | | | | |
|---|---|---|---|---|---|---|---|---|
| ELR-SIG-1 | B0 | B1 | B2 | B3-B9 | | B10-B13 | B14-17 | B18-23 |
| | ELR-version | MCS | Coding | TXOP | | Partial AID -1 | CRC | Tail |
| ELR-SIG-2 | B0-B4 | | | | B5-B13 | | B14-17 | B18-23 |
| | Partial AID-2 | | | | LENGTH | | CRC | Tail |

### ELR-SIG-1:

B0: PHY Version Identifier: Differentiate between different PHY clauses.
Example with 1-bit:
Set to 0 for UHR ELR
Values 1 is Validate

B1: MCS indicates the MCS used for the modulating the ELR-DATA,

### Example parameters:

Set to 0 for ELR-MCSO(BPSK, 1/2);
Set to 1 for ELR-MCS1(QPSK, 1/2);

B2: coding, indicate BCC or LDPC, 2x LDPC may not be used in ELR.

B3-B9: TXOP: the remaining duration of the TXOP
B10-B13: Partial AID-1: the first part of the partial AID

If the partial AID-1 doesn't match with the receiver's, the receiver may stop the reception and set the NAV according to the current NAV setting rules. For spatial reuse, the receiver may further check the BSS color indicated in the preceding ELR-Mark. For example, if the BSS color matches the receiver's (i.e., the ELR PPDU comes from the same BSS as the receiver's), the NAV may be set according to the TXOP field; otherwise, the NAV is not set according to the TXOP field.

B14-B17: CRC

B18-B23: Tail

ELR-SIG-2:
B0-4: Partial AID-2: the second part of the partial AID

B4: coding, indicate BCC or LDPC, 2x LDPC may not be used in ELR.
B5-B13: LENGTH: the length of the PPDU
B14:B17: CRC
B18:B23: Tail

Design 6: ELR SIG filed is of two OFDM symbols carrying the following two parts with 48-bit information in total:

| | | | | | | | | | |
|---|---|---|---|---|---|---|---|---|---|
| ELR-SIG-1 | B0 | | B1-B9 | B10-B20 | | B21 | | B22-B23 | |
| | ELR version | | LENGTH | AID | | MCS | | Coding | |
| ELR-SIG-2 | B0-B6 | B7-B12 | | | B13 | | B14-B17 | | B18-B23 |
| | TXOP | BSS Color | | | Reserved | | CRC | | Tail |

The descriptions of BSS Color, TXOP, CRC and Tail may be the same as that defined in Table 36-28 of Draft P802.11be_D4.0 and Draft P802.11me_D5.0.

Because each OFDM symbol can only carry 3 or 6 bytes of payload information, there is no need for the field of extra LDPC segment. Because the AID and BSS color are signal in ELR-SIG and ELR-Mark, there is no need to for the field of UL/DL.

Design 6 puts LENTH and AID in the first OFDM symbol so that each of the two don't get split into two OFDM symbols. Similarly, Design 6 puts TXOP and BSS color in the second OFDM symbol so that each of the two don't get split into two OFDM symbols.

The ELR version field can be one bit or two bits. The Coding field can be one or two bits as well. There is enough room to accommodate the 2-bit design variants.

MCS field indicates the MCS used for the modulating the ELR-DATA,

### Example parameters:

Set to 0 for ELR-MCSO(BPSK, 1/2);
Set to 1 for ELR-MCS1(QPSK, 1/2).

Coding field indicates whether BCC or LDPC, or legacy LDPC or 2x LDPC used in the ELR PPDU. At most, 2 bits are used. If 2x LDPC is supported by ELR, one bit is enough. If one fixed coding method is used for the ELR-DATA, this field is not needed can be reserved.

BSS Color field indicates a short version of the BSS ID. Because BSS color is also indicated in ELR-Mark, the BSS color field may not be need and the bits of it may be set as reserved bits, or disregard bits, or validate bits. If the ELR-Mark only indicates partial information about the BSS color that is represented by 6 bits, partial or full BSS color is indicated in ELR-SIG. There is enough room to accommodate the full BSS color indication.

Reserved bit like B13 may be set as reserved bits, or disregard bits, or validate bits.

Proposal 2: deferring, NAV setting or resetting rules with ELR PPDU

Non-AP ELR STA shall maintain two legacy NAVs (intra-BSS NAV and basic NAV) as EHT non-AP STA and may maintain ELR NAV (inter-BSS ELR NAV). The deferring, setting or resetting rules upon reception of an ELR-PPDU are as follows:

If the non-AP ELR STA is able to decode the L-SIG, RL-SIG and U-SIG of the ELR-PPDU.

If it is an intra-BSS UL ELR-PPDU based on the BSS color, DL/UL and TXOP field information from the U-SIG, it will update its legacy intra-BSS NAV when the new NAV value is greater than the current intra-BSS NAV value, then the non-AP ELR STA can select to go to sleep mode after the U-SIG reception.

If it is an intra-BSS DL ELR-PPDU not for the STA based on the BSS color and DL/UL fields information from the U-SIG and also the AID field information from the ELR-SIG, it will update its legacy intra-BSS NAV when the new NAV value is greater than the current intra-BSS NAV value, then the non-AP ELR STA may go to sleep mode after the ELR-SIG reception.

If it is an intra-BSS DL ELR-PPDU for the non-AP STA based on the BSS color and DL/UL fields information from the U-SIG and also the AID field from the ELR-SIG, the non-AP ELR STA will continue decode the rest of the ELR-PPDU.

If it is an inter-BSS ELR-PPDU, it will update its legacy basic NAV when the new NAV value is greater than the current basic NAV value and update its inter-BSS ELR-NAV when the new NAV value is greater than the current inter-BSS ELR NAV value if it maintain the ELR NAV after the U-SIG reception. In some embodiment, no inter-BSS ELR NAV is employed. Namely, inter-BSS ELR-PPDU is treated the same as inter-BSS non-ELR PPDU in NAV setting/resetting. In this case, there is no need to update the inter-BSS ELR NAV.

If the non-AP ELR STA is not able to decode the L-SIG, RL-SIG and U-SIG of the ELR-PPDU, but is able to decode the ELR-MARK with BSS color and the ELR-SIG with LENGTH field in Design 1 below

Design 1: ELR SIG filed is of two OFDM symbols carrying the following 48-bit information:

| | | | | | | | |
|---|---|---|---|---|---|---|---|
| ELR-SIG-1 | B0-B1 | B2 | B3 | B4 | B5-B13 | B14-B17 | B18-B23 |
| | ELR-version | DL/UL | MCS | Coding | LENGTH | CRC | Tail |
| ELR-SIG-2 | B0-B10 | | | | B11-B13 | B14-B17 | B18-B23 |
| | AID | | | | Reserved | CRC | Tail |

If it is an intra-BSS UL ELR-PPDU based on the BSS color and DL/UL field information from the ELR-SIG-1, it will defer the PPDU transmission based on the LEGNTH field from the ELR_SIG 1, then the non-AP ELR STA can choose to go to sleep mode after the ELR-SIG-1 reception.

If it is an intra-BSS DL ELR-PPDU not for the STA based on the BSS color and DL/UL fields information from the ELR-SIG-1 and also the AID field information from the ELR-SIG-2, it will defer the PPDU transmission based on the LEGNTH field from the ELR_SIG 1, then the non-AP ELR STA can choose to go to sleep mode after the ELR-SIG-2 reception.

If it is an intra-BSS DL ELR-PPDU for the non-AP STA based on the BSS color and DL/UL fields information from the ELR-SIG-1 and also the AID field from the ELR-SIG-2, the non-AP ELR STA will continue decode the rest of the ELR-PPDU.

If it is an inter-BSS ELR-PPDU, it may ignore the rest of ELR-PPDU reception after ELR_MARK reception and go to listening mode or channel access mode if the legacy basic NAV and intra-BSS NAV are both equal to 0. It may follow existing defer rules to defer the channel access for PPDU (or ELR PPDU only) transmission for a certain time, such as 5ms after the ELR MARK reception. It may follow existing defer rules to defer the channel access for PPDU transmission (may for ELR PPDU only) until the end of the current ELR-PPDU + SIFS+ transmission time costed by BA or ACK based on the LEGNTH field information after the ELR-SIG-1 reception.

If the non-AP ELR STA is not able to decode the L-SIG, RL-SIG and U-SIG of the ELR-PPDU, but is able to decode the ELR-MARK with BSS color and the ELR-SIG in Design 2 below

Design 2: ELR SIG filed is of two OFDM symbols carrying the following 48-bit information:

| | | | | | | |
|---|---|---|---|---|---|---|
| ELR-SIG-1 | B0 | B1 | B2 | B3-13 | B14-17 | B18-23 |
| | ELR-version | MCS | Coding | AID | CRC | Tail |
| ELR-SIG-2 | BO-B8 | | B9-B13 | | B14-17 | B18-23 |
| | LENGTH | | Reserved | | CRC | Tail |

If it is an intra-BSS UL ELR-PPDU or intra-BSS DL ELR-PPDU not for the STA based on the BSS color and AID fields information from the ELR-SIG-1, it may follow existing defer rules to defer the channel access for PPDU transmission until the end of the current ELR-PPDU + SIFS+ transmission time costed by BA or ACK based on the LEGNTH field information and go to sleep mode after the ELR-SIG-2 reception.

If it is an intra-BSS DL ELR-PPDU for the non-AP STA based on the BSS color and AID fields information from the ELR-SIG-1, the non-AP ELR STA will continue decoding the rest of the ELR-PPDU.

If it is an inter-BSS ELR-PPDU, it may ignore the rest of ELR-PPDU reception after ELR_MARK reception and go to listening mode or channel access mode if the legacy basic NAV and intra-BSS NAV are both equal to 0. It may follow existing defer rules to defer the channel access for PPDU (or ELR PPDU only) transmission for a certain time, such as 5ms after the ELR MARK reception. It may follow existing defer rules to defer the channel access for PPDU transmission (may for ELR PPDU only) until the end of the current ELR-PPDU + SIFS+ transmission time costed by BA or ACK based on the LEGNTH field information after the ELR-SIG-2 reception.

If the non-AP ELR STA is not able to decode the L-SIG, RL-SIG and U-SIG of the ELR-PPDU, but is able to decode the ELR-MARK with BSS color and the ELR-SIG in Design 3 below

Design 3: ELR SIG filed is of two OFDM symbols carrying the following 48-bit information with BSS color:

| | | | | | | | | |
|---|---|---|---|---|---|---|---|---|
| ELR-SIG-1 | B0 | B1 | B2 | B3 | B4-9 | B10-B13 | B 14-17 | B18-23 |
| | ELR-version | DL/UL | MCS | Coding | BSS color | Partial AID-1 | CRC | Tail |
| ELR-SIG-2 | B0-B4 | | | B5-B13 | | | B 14-17 | B18-23 |
| | Partial AID-2 | | | LENGTH | | | CRC | Tail |

If it is an intra-BSS UL ELR-PPDU or an intra-BSS DL ELR-PPDU not for the STA based on the BSS color, DL/UL and/or Partial AID field from the ELR-SIG-1 and ELR-SIG-2, it may follow existing defer rules to defer the PPDU transmission until the end of the current ELR-PPDU + SIFS+ transmission time costed by BA or ACK based on the LEGNTH field information and go to sleep mode after the ELR-SIG-2 reception.

If it is an intra-BSS DL ELR-PPDU for the non-AP STA based on the BSS color and partial AID-1 and partial AID-2 fields information from the ELR-SIG-1 and ELR-SIG-2, the non-AP ELR STA will continue decoding the rest of the ELR-PPDU.

If it is an inter-BSS ELR-PPDU, it may ignore the rest of ELR-PPDU reception after ELR_MARK reception and go to listening mode or channel access mode if the legacy basic NAV and intra-BSS NAV are both equal to 0. It may follow existing defer rules to defer the channel access for PPDU (or ELR PPDU only) transmission for a certain time, such as 5ms after the ELR MARK reception. It may follow existing defer rules to defer the channel access for PPDU transmission (may for ELR PPDU only) until the end of the current ELR-PPDU + SIFS+ transmission time costed by BA or ACK based on the LEGNTH field information after the ELR-SIG-2 reception.

If the non-AP ELR STA is not able to decode the L-SIG, RL-SIG and U-SIG of the ELR-PPDU, but is able to decode the ELR-MARK with BSS color and following ELR-SIG with design 4

Design 4: ELR SIG filed is two OFDM symbols carrying the following 48-bit information with BSS color:

| | | | | | | | | |
|---|---|---|---|---|---|---|---|---|
| ELR-SIG-1 | B0 | B1 | B2 | B3 | B4-9 | B10-B13 | B 14-17 | B18-23 |
| | ELR-version | DL/UL | MCS | Coding | BSS color | LENGTH-1 | CRC | Tail |
| ELR-SIG-2 | B0-B4 | | | B5-B13 | | | B 14-17 | B18-23 |
| | LENGTH-2 | | | Partial AID | | | CRC | Tail |

If it is an intra-BSS UL ELR-PPDU or an intra-BSS DL ELR-PPDU not for the STA based on the BSS color, DL/UL and/or Partial AID field from the ELR-SIG-1 and ELR-SIG-2, it may follow existing defer rules to defer the PPDU transmission until the end of the current ELR-PPDU + SIFS+ transmission time costed by BA or ACK based on the LEGNTH field information and go to sleep mode after the ELR-SIG-2 reception.

If it is an intra-BSS DL ELR-PPDU for the STA based on the BSS color, DL/UL and also the Partial AID field from ELR-SIG-1 and ELR-SIG-2, the non-AP ELR STA will continue decoding the rest of the ELR-PPDU.

If it is an inter-BSS ELR-PPDU, it may ignore the rest of ELR-PPDU reception after ELR_MARK reception and go to listening mode or channel access mode if the legacy basic NAV and intra-BSS NAV are both equal to 0. It may follow existing defer rules to defer the channel access for PPDU (or ELR PPDU only) transmission for a certain time, such as 5ms after the ELR MARK reception. It may follow existing defer rules to defer the channel access for PPDU transmission (may for ELR PPDU only) until the end of the current ELR-PPDU + SIFS+ transmission time costed by BA or ACK based on the LEGNTH field information after the ELR-SIG-2 reception.

If the non-AP ELR STA is not able to decode the L-SIG, RL-SIG and U-SIG of the ELR-PPDU, but is able to decode the ELR-MARK with BSS color and following ELR-SIG with TXOP in design 5.

Design 5: ELR SIG filed is of two OFDM symbols carrying the following 48-bit information with TXOP:

| | | | | | | | | |
|---|---|---|---|---|---|---|---|---|
| ELR-SIG-1 | B0 | B1 | B2 | B3-B9 | | B10-B13 | B14-17 | B18-23 |
| | ELR-version | MCS | Coding | TXOP | | Partial AID -1 | CRC | Tail |
| ELR-SIG-2 | B0-B4 | | | | B5-B13 | | B14-17 | B18-23 |
| | Partial AID-2 | | | | LENGTH | | CRC | Tail |

If it is an intra-BSS UL ELR-PPDU or an intra-BSS DL ELR-PPDU not for the STA based on the BSS color and Partial AID-1 field from the ELR-SIG-1, it may follow existing NAV setting rules to set or update the intra-BSS NAV if the new NAV value is greater than the current intra-BSS NAV value based on the TXOP field information and go to sleep mode after the ELR-SIG-1 reception.

If it is an intra-BSS DL ELR-PPDU not for the STA based on the BSS color and Partial AID-1 and partial AID-2 field from the ELR-SIG-1 and ELR-SIG-2, it may follow existing NAV setting rules to set or update the intra-BSS NAV if the new NAV value is greater than the current intra-BSS NAV value based on the TXOP field information and go to sleep mode after the ELR-SIG-2 reception.

If it is an intra-BSS DL ELR-PPDU for the STA based on the BSS color and the Partial AID field from ELR-SIG-1 and ELR-SIG-2, the non-AP ELR STA will continue decoding the rest of the ELR-PPDU.

If it is an inter-BSS ELR-PPDU, it may ignore the rest of ELR-PPDU reception after ELR_MARK reception and go to listening mode or channel access mode if the legacy basic NAV and intra-BSS NAV are both equal to 0. It may follow existing NAV setting rules to set or update the legacy basic NAV if the new NAV value is greater than the current basic NAV value based on the TXOP field information after the ELR-SIG-2 reception. It may follow existing NAV setting rules to set or update the ELR NAV only without updating the legacy basic NAV if the ELR STA maintain ELR NAV and the new NAV value is greater than the current ELR NAV value based on the TXOP field information after the ELR-SIG-2 reception.

The setting or resetting rules upon reception of a non ELR-PPDU for an ELR non-AP STA are as follows:

If the non-AP ELR STA is able to decode the L-SIG, RL-SIG and U-SIG,

If it is intra-BSS UL non ELR-PPDU based on the BSS color and DL/UL fields information from the U-SIG, it will update its legacy intra-BSS NAV when the new NAV value is greater than the current intra-BSS NAV value, then the non-AP ELR STA can select to go to sleep mode after the U-SIG reception.

If it is intra-BSS DL non ELR-PPDU not for the STA based on the BSS color and DL/UL fields information from the U-SIG and also the AID field information from the UHR-SIG, it will update its legacy intra-BSS NAV when the new NAV value is greater than the current intra-BSS NAV value, then the non-AP ELR STA can select to go to sleep mode after the UHR-SIG reception.

If it is intra-BSS DL non ELR-PPDU for the non-AP STA based on the BSS color and DL/UL fields information from the U-SIG and also the AID field from the UHR-SIG, the non-AP ELR STA will continue decode the rest of the non ELR-PPDU.

If it is inter-BSS non ELR -PPDU, it will update its legacy basic NAV when the new NAV value is greater than the current basic NAV value, and update its inter-BSS ELR-NAV if it maintain the ELR NAV when the new NAV value is greater than the current inter-BSS ELR NAV value after the U-SIG reception.

AP STA will follow existing NAV setting rule to maintain one legacy basic NAV (Inter-BSS NAV), it may also maintain one ELR NAV (inter-BSS ELR NAV). The NAV setting or resetting rules upon reception of an ELR-PPDU are as follows:
If the AP ELR STA is able to decode the L-SIG, RL-SIG and U-SIG,

If it is intra-BSS UL ELR-PPDU based on the BSS color and DL/UL fields information from the U-SIG, it will continue decode the rest of the ELR-PPDU.

If it is inter-BSS ELR-PPDU, it will following existing NAV setting rules to update its legacy basic NAV when the new NAV value is greater than the current basic NAV value, and update its inter-BSS ELR-NAV if it maintains the ELR NAV when the new NAV value is greater than the current inter-BSS ELR NAV value after the U-SIG reception.

If the AP ELR STA is not able to decode the L-SIG, RL-SIG and U-SIG, but is able to decode the ELR-MARK with BSS color and following ELR-SIG

If it is intra-BSS UL ELR-PPDU based on the BSS color from the ELR-MARK, it will continue decode the rest of the ELR-PPDU.

If it is inter-BSS ELR -PPDU, it may ignore the rest of ELR-PPDU reception after ELR_MARK reception and go to listening mode or channel access mode if the legacy basic NAV is equal to 0. It can also continue the detection to get the LENGTH/TXOP field information until the ELR-SIG-SIG and defer the channel access for PPDU (or ELR PPDU only) transmission until the end of the current ELR-PPDU + SIFS+BA/ACK based on the LENGTH filed information from ELR-SIG if TXOP is not defined in ELR-SIG after ELR-SIG reception. It may follow existing NAV setting rules to set or update the legacy basic NAV if the new NAV value is greater than the current basic NAV value based on the TXOP field information after the ELR-SIG reception if TXOP duration filed is defined in the ELR-SIG. It may follow existing NAV setting rules to set or update the ELR NAV only without updating the legacy basic NAV if the ELR STA maintain ELR NAV and the new NAV value is greater than the current ELR NAV value based on the TXOP field information after the ELR-SIG reception. For the random back off for non-ELR PPDU transmission, the AP is allowed to minus the backoff counter with the time costed by the ELR-STF, ELR-LTF, ELR-SIG1 and ELR-SIG2.

AP STA will follow existing NAV setting rule to maintain one legacy basic NAV (Inter-BSS NAV), it may also maintain one ELR NAV (inter-BSS ELR NAV). The NAV setting or resetting rules upon reception of a non ELR-PPDU are as follows:

If the AP ELR STA is able to decode the L-SIG, RL-SIG and U-SIG,
If it is intra-BSS UL non ELR-PPDU based on the BSS color and DL/UL fields information from the U-SIG, it will continue decode the rest of the non ELR-PPDU.

If it is inter-BSS non ELR -PPDU, it will update its legacy basic NAV when the new NAV value is greater than the current basic NAV value, and update its ELR-NAV when the new NAV value is greater than the current inter-BSS ELR NAV value if it maintain the ELR NAV after the U-SIG reception.

The benefit of the design 1 is that the receiver can based on the BSS Color from ELR-mark field and UL/DL and LEGNTH fields from ELR-SIG-1 to determine whether to continue decoding the next OFDM symbols or defer the PPDU transmission after the ELR-SIG 1 reception. For example, if the receiver (non-AP STA) decoded that BSS Color is the same as the receiver's BSS color from the ELR-MARK and UL/DL is UL, the receiver will defer the channel access for PPDU transmission to the end of the current ELR-PPDU + SIFS + transmission time for ACK/BA frame and stop decoding the next OFDM symbol. if the receiver (non-AP STA) decoded that BSS Color is the same as the receiver's BSS color and UL/DL is DL, the receiver will continue decoding the following OFDM symbols. If the receiver (AP STA) decoded that UL/DL is UL, BSS Color is the same as the receiver's BSS color, the receiver will continue decoding the next OFDM symbols.

Proposal 3: non MU MIMO user info field design for non-ELR PPDU in 802.11bn
FIG. 11 shows an example illustration of non MU MIMO user info field design, referred to as Design 1 herein.

In Design 1:
B0-B10 will be kept the same for STA-ID.
B11-B15 will be used for the MCS indication with MCS0-MCS15 indication be the same as that in 802.11be.
B16-B18 will be used for the NSS indication supporting up to 8 spatial streams as 802.11be if equal modulation, indicated by bit B19, is going to be used or unequal modulation patterns indications supporting up to 8 patterns for NSS=2,3 or 4 as shown below, if unequal modulation, indicated by bit B19, is going to be used.
QAM/QAM-1
QAM/QAM-2
QAM/QAM/QAM-1
QAM/QAM/QAM-2
QAM/QAM-1/QAM-2
QAM/QAM /QAM/QAM-1
QAM/QAM /QAM/QAM-2
QAM/QAM /QAM-1/QAM-2)
Table 1 shows one example indication method.

**Table 1: UEQM pattern indication**

| B19-B21 | UEQM pattern | |
|---|---|---|
| 0 0 0 | QAM/QAM-1 | |
| 0 0 1 | | QAM/QAM-2 |
| 0 1 0 | QAM/QAM/QAM-1 | |
| 0 1 1 | | QAM/QAM/QAM-2 |
| 1 0 0 | | QAM/QAM-1/QAM-2 |
| 1 0 1 | | QAM/QAM/QAM/QAM-1 |
| 1 1 0 | | QAM/QAM/QAM/QAM-2 |
| 1 1 1 | | QAM/QAM/QAM-1/QAM-2 |

B20-B22:
If B19 is set to be EQM mode.

B20 will be used as BF indication as in EHT.

B21 combined with new added bit B22 will be used to indicate coding, one example is:
0: BCC;
1: legacy LDCP with codeword length up to 1944;
2: 2x LDPC with codeword length up to 3888 or LDPC with codeword length of 3888 is used for the current PPDU;
3: reserved.

If B19 is set to be UEQM mode, BF and LDPC are used by default B20 and B21 may be used to indicate the number of NSS range, one example design is as following:
0: NSS=2,3 or 4 8 UEQM patterns with NSS information may be indicated by B16-B18 as shown in Table 1;
1: NSS=5-6, up to 8 to be defined UEQM patterns with NSS information may be indicated by B16-B18;
2: NSS=7, up to 8 to be defined UEQM patterns with NSS information may be indicated by B16-B18;
3: NSS=8, up to 8 UEQM patterns with NSS information may be indicated by B16-B18.

The new added bit B22 will be used to indicate coding, one example is:
0: legacy LDCP with codeword length up to 1944;
1: 2x LDPC with codeword length up to 3888 or LDPC with codeword length of 3888 is used for the current PPDU.

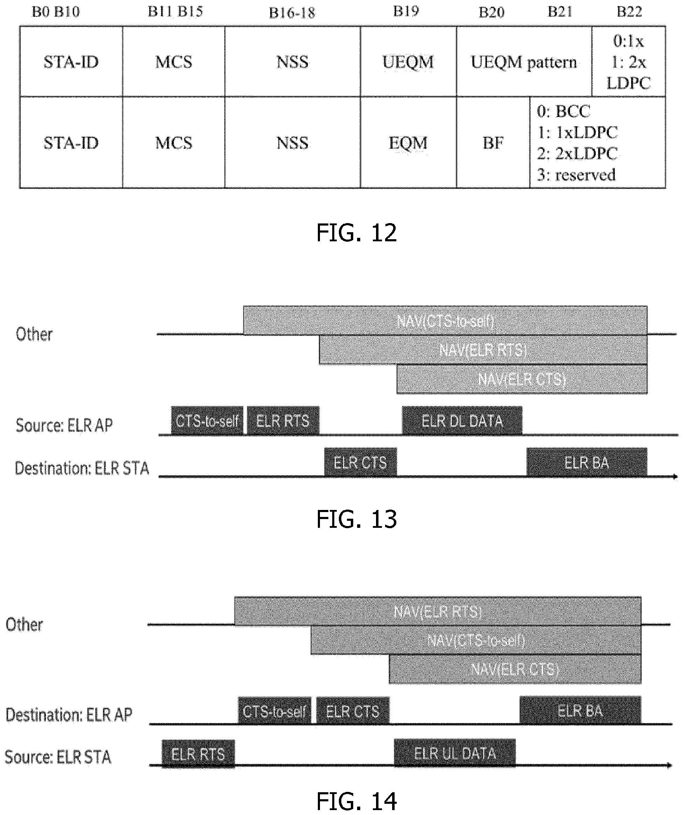

FIG. 12 shows an example illustration of non MU MIMO user info field design, referred to as Design 2 herein.

In Design 2:
B0-B10 will be kept the same for STA-ID.
B11-B15 will be used for the MCS indication with MCS0-MCS15 indication be the same as that in 802.11be.
B16-B18 will be used for the NSS indication supporting up to 8 spatial streams as 802.11be. B19: EQM/UEQM mode indication bit. Example: 0 for EQM and 1 for UEQM.

B20-B22:
If B19 is set to be EQM mode;
B20 will be used as BF indication as in EHT;
B21 combined with new added bit B22 will be used to indicate coding, one example is:
   0: BCC;
   1: legacy LDCP with codeword length up to 1944;
   2: 2x LDPC with codeword length up to 3888 or LDPC with codeword length of 3888 is used for the current PPDU;
   3: reserved.
If B19 is set to be UEQM mode, BF and LDPC are used by default.
B20 and B21 may be used to indicate the UEQM patterns as proposed by others.

The new added bit B22 will be used to indicate coding, one example is:
0: legacy LDCP with codeword length up to 1944;
1: 2x LDPC with codeword length up to 3888 or LDPC with codeword length of 3888 is used for the current PPDU.
Note: to keep 52-bit for UHR-SIG field for SU transmission, the total number of bits for the common info field in non-OFDMA transmission will be reduced from 20 bits to 19 bits by reducing the number of Disregard subfield from 4 bits to 3 bits, which will be B13-B15 and the Number of non-OFDMA Users Subfield will be 16-B18.

Proposal 4: Enhanced RTS/CTS protocol to mitigate the hidden node problem for ELR PPDU transmission
FIG. 13 shows an example illustration of a downlink case.

### In Downlink case:

The RTS and CTS frame may be transmitted with ELR frame format. On the other hand, before the AP send the ELR RTS frame, it will send a CTS-to-self firstly to protect the ELR PPDU transmission from legacy mode STA. This protocol can also be extended to support ELR transmission with multiple fragments.

FIG. 14 shows an example illustration of an uplink case.

### In Uplink case:

Before the AP feedback the CTS frame with the ELR format, it will send a CTS-to-self firstly to protect the ELR PPDU transmission from legacy STA. This protocol can also be extended to support ELR transmission with multiple fragments.

It is understood that the above descriptions are for the purposes of illustration and are not meant to be limiting.

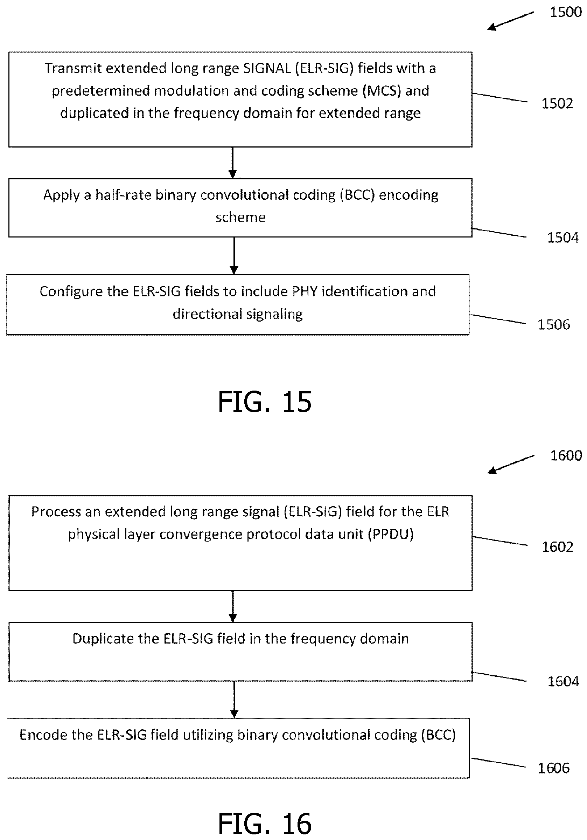

FIG. 15 illustrates a flow diagram of illustrative process 1500 for an ELR signal design system, in accordance with one or more example embodiments (e.g. ELR Signal Design) of the present disclosure.

At block 1502, a device (e.g., the user device(s) 120 and/or the AP 102 of FIG. 1 and/or the ELR Signal Design device 1819 of FIG. 18) may transmit extended long range SIGNAL (ELR-SIG) fields with a predetermined modulation and coding scheme (MCS) and duplicated in the frequency domain for extended range.

At block 1504, the device may apply a half-rate binary convolutional coding (BCC) encoding scheme.

At block 1506, the device may configure the ELR-SIG fields to include PHY identification and directional signaling.

FIG. 16 illustrates a flow diagram of illustrative process 1600 for an Extended Range Communication system, in accordance with one or more example embodiments (e.g. Extended Range Communication) of the present disclosure.

At block 1602, a device (e.g., the user device(s) 120 and/or the AP 102 of FIG. 1 and/or the Extended Range Communication device 1819 of FIG. 18) may process an extended long range signal (ELR-SIG) field for the ELR physical layer convergence protocol data unit (PPDU).

At block 1604, the device may duplicate the ELR-SIG field in the frequency domain.

At block 1606, the device may encode the ELR-SIG field utilizing binary convolutional coding (BCC).

It is understood that the above descriptions are for the purposes of illustration and are not meant to be limiting.

FIG. 17 shows a functional diagram of an exemplary communication station 1700, in accordance with one or more example embodiments of the present disclosure. In one embodiment, FIG. 17 illustrates a functional block diagram of a communication station that may be suitable for use as an AP 102 (FIG. 1) or a user device 120 (FIG. 1) in accordance with some embodiments. The communication station 1700 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1700 may include communications circuitry 1702 and a transceiver 1710 for transmitting and receiving signals to and from other communication stations using one or more antennas 1701. The communications circuitry 1702 may include circuitry that can operate the physical layer (PHY) communications and/or medium access control (MAC) communications for controlling access to the wireless medium, and/or any other communications layers for transmitting and receiving signals. The communication station 1700 may also include processing circuitry 1706 and memory 1708 arranged to perform the operations described herein. In some embodiments, the communications circuitry 1702 and the processing circuitry 1706 may be configured to perform operations detailed in the above figures, diagrams, and flows.

In accordance with some embodiments, the communications circuitry 1702 may be arranged to contend for a wireless medium and configure frames or packets for communicating over the wireless medium. The communications circuitry 1702 may be arranged to transmit and receive signals. The communications circuitry 1702 may also include circuitry for modulation/demodulation, upconversion/downconversion, filtering, amplification, etc. In some embodiments, the processing circuitry 1706 of the communication station 1700 may include one or more processors. In other embodiments, two or more antennas 1701 may be coupled to the communications circuitry 1702 arranged for sending and receiving signals. The memory 1708 may store information for configuring the processing circuitry 1706 to perform operations for configuring and transmitting message frames and performing the various operations described herein. The memory 1708 may include any type of memory, including non-transitory memory, for storing information in a form readable by a machine (e.g., a computer). For example, the memory 1708 may include a computer-readable storage device, read-only memory (ROM), random-access memory (RAM), magnetic disk storage media, optical storage media, flash-memory devices and other storage devices and media.

In some embodiments, the communication station 1700 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1700 may include one or more antennas 1701. The antennas 1701 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1700 may include one or more of a keyboard, a display, a non-volatile memory port, multiple antennas, a graphics processor, an application processor, speakers, and other mobile device elements. The display may be an LCD screen including a touch screen.

Although the communication station 1700 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 1700 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1700 may include one or more processors and may be configured with instructions stored on a computer-readable storage device.

FIG. 18 illustrates a block diagram of an example of a machine 1800 or system upon which any one or more of the techniques (e.g., methodologies) discussed herein may be performed. In other embodiments, the machine 1 8 00 may operate as a standalone device or may be connected (e.g., networked) to other machines. In a networked deployment, the machine 1800 may operate in the capacity of a server machine, a client machine, or both in server-client network environments. In an example, the machine 1800 may act as a peer machine in peer-to-peer (P2P) (or other distributed) network environments. The machine 1 8 00 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1800 may include a hardware processor 1802 (e.g., a central processing unit (CPU), a graphics processing unit (GPU), a hardware processor core, or any combination thereof), a main memory 1804 and a static memory 1806, some or all of which may communicate with each other via an interlink (e.g., bus) 1808. The machine 1 8 00 may further include a power management device 1 8 32, a graphics display device 1810, an alphanumeric input device 1812 (e.g., a keyboard), and a user interface (UI) navigation device 1814 (e.g., a mouse). In an example, the graphics display device 1810, alphanumeric input device 1 8 12, and UI navigation device 1 8 14 may be a touch screen display. The machine 1800 may additionally include a storage device (i.e., drive unit) 1816, a signal generation device 1 8 18 (e.g., a speaker), an Extended Range Communication and/or ELR Signal Design device 1819, a network interface device/transceiver 1820 coupled to antenna(s) 1 8 30, and one or more sensors 1 8 28, such as a global positioning system (GPS) sensor, a compass, an accelerometer, or other sensor. The machine 1800 may include an output controller 1834, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1802 for generation and processing of the baseband signals and for controlling operations of the main memory 1804, the storage device 1816, and/or the Extended Range Communication and/or ELR Signal Design device 1819. The baseband processor may be provided on a single radio card, a single chip, or an integrated circuit (IC).

The storage device 1 8 16 may include a machine readable medium 18 22 on which is stored one or more sets of data structures or instructions 1824 (e.g., software) embodying or utilized by any one or more of the techniques or functions described herein. The instructions 1824 may also reside, completely or at least partially, within the main memory 1804, within the static memory 1 806, or within the hardware processor 1 8 02 during execution thereof by the machine 1800. In an example, one or any combination of the hardware processor 1 8 02, the main memory 1 8 04, the static memory 1 8 06, or the storage device 1816 may constitute machine-readable media.

The Extended Range Communication and/or ELR Signal Design device 1819 may carry out or perform any of the operations and processes (e.g., process 1500, process 1600) described and shown above.

It is understood that the above are only a subset of what the Extended Range Communication and/or ELR Signal Design device 1819 may be configured to perform and that other functions included throughout this disclosure may also be performed by the Extended Range Communication and/or ELR Signal Design device 1819.

While the machine-readable medium 1822 is illustrated as a single medium, the term "machine-readable medium" may include a single medium or multiple media (e.g., a centralized or distributed database, and/or associated caches and servers) configured to store the one or more instructions 1824.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1800 and that cause the machine 1800 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1824 may further be transmitted or received over a communications network 1826 using a transmission medium via the network interface device/transceiver 1820 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1820 may include one or more physical jacks (e.g., Ethernet, coaxial, or phone jacks) or one or more antennas to connect to the communications network 1826. In an example, the network interface device/transceiver 1820 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1800 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

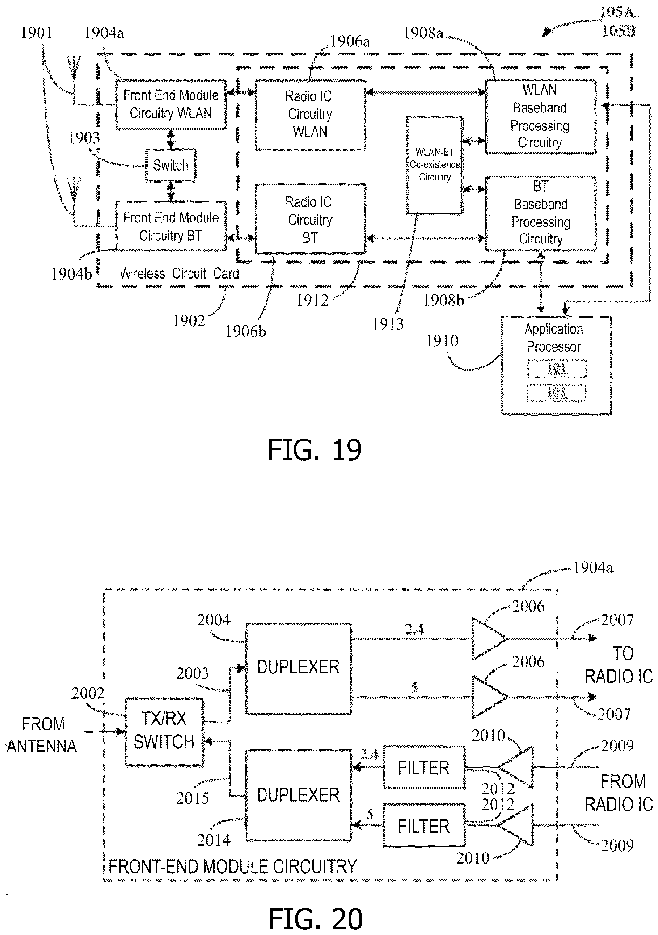

FIG. 19 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1904a-b, radio IC circuitry 1906a-b and baseband processing circuitry 1908a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1904a-b may include a WLAN or Wi-Fi FEM circuitry 1904a and a Bluetooth (BT) FEM circuitry 1904b. The WLAN FEM circuitry 1904a may include a receive signal path comprising circuitry configured to operate on WLAN RF signals received from one or more antennas 1901, to amplify the received signals and to provide the amplified versions of the received signals to the WLAN radio IC circuitry 1906a for further processing. The BT FEM circuitry 1904b may include a receive signal path which may include circuitry configured to operate on BT RF signals received from one or more antennas 1901, to amplify the received signals and to provide the amplified versions of the received signals to the BT radio IC circuitry 1906b for further processing. FEM circuitry 1904a may also include a transmit signal path which may include circuitry configured to amplify WLAN signals provided by the radio IC circuitry 1906a for wireless transmission by one or more of the antennas 1901. In addition, FEM circuitry 1904b may also include a transmit signal path which may include circuitry configured to amplify BT signals provided by the radio IC circuitry 1906b for wireless transmission by the one or more antennas. In the embodiment of FIG. 19, although FEM 1904a and FEM 1904b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1906a-b as shown may include WLAN radio IC circuitry 1906a and BT radio IC circuitry 1906b. The WLAN radio IC circuitry 1906a may include a receive signal path which may include circuitry to down-convert WLAN RF signals received from the FEM circuitry 1904a and provide baseband signals to WLAN baseband processing circuitry 1908a. BT radio IC circuitry 1906b may in turn include a receive signal path which may include circuitry to down-convert BT RF signals received from the FEM circuitry 1904b and provide baseband signals to BT baseband processing circuitry 1908b. WLAN radio IC circuitry 1906a may also include a transmit signal path which may include circuitry to up-convert WLAN baseband signals provided by the WLAN baseband processing circuitry 1908a and provide WLAN RF output signals to the FEM circuitry 1904a for subsequent wireless transmission by the one or more antennas 1901. BT radio IC circuitry 1906b may also include a transmit signal path which may include circuitry to up-convert BT baseband signals provided by the BT baseband processing circuitry 1908b and provide BT RF output signals to the FEM circuitry 1904b for subsequent wireless transmission by the one or more antennas 1901. In the embodiment of FIG. 19, although radio IC circuitries 1906a and 1906b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1908a-b may include a WLAN baseband processing circuitry 1908a and a BT baseband processing circuitry 1908b. The WLAN baseband processing circuitry 1908a may include a memory, such as, for example, a set of RAM arrays in a Fast Fourier Transform or Inverse Fast Fourier Transform block (not shown) of the WLAN baseband processing circuitry 1908a. Each of the WLAN baseband circuitry 1908a and the BT baseband circuitry 1908b may further include one or more processors and control logic to process the signals received from the corresponding WLAN or BT receive signal path of the radio IC circuitry 1906a-b, and to also generate corresponding WLAN or BT baseband signals for the transmit signal path of the radio IC circuitry 1906a-b. Each of the baseband processing circuitries 1908a and 1908b may further include physical layer (PHY) and medium access control layer (MAC) circuitry, and may further interface with a device for generation and processing of the baseband signals and for controlling operations of the radio IC circuitry 1906a-b.

Referring still to FIG. 19, according to the shown embodiment, WLAN-BT coexistence circuitry 1913 may include logic providing an interface between the WLAN baseband circuitry 1908a and the BT baseband circuitry 1908b to enable use cases requiring WLAN and BT coexistence. In addition, a switch 1903 may be provided between the WLAN FEM circuitry 1904a and the BT FEM circuitry 1904b to allow switching between the WLAN and BT radios according to application needs. In addition, although the antennas 1901 are depicted as being respectively connected to the WLAN FEM circuitry 1904a and the BT FEM circuitry 1904b, embodiments include within their scope the sharing of one or more antennas as between the WLAN and BT FEMs, or the provision of more than one antenna connected to each of FEM 1904a or 1904b.

In some embodiments, the front-end module circuitry 1904a-b, the radio IC circuitry 1906a-b, and baseband processing circuitry 1908a-b may be provided on a single radio card, such as wireless radio card 1902. In some other embodiments, the one or more antennas 1901, the FEM circuitry 1904a-b and the radio IC circuitry 1906a-b may be provided on a single radio card. In some other embodiments, the radio IC circuitry 1906a-b and the baseband processing circuitry 1908a-b may be provided on a single chip or integrated circuit (IC), such as IC 1912.

In some embodiments, the wireless radio card 1902 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1908b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 20 illustrates WLAN FEM circuitry 1904a in accordance with some embodiments. Although the example of FIG. 20 is described in conjunction with the WLAN FEM circuitry 1904a, the example of FIG. 20 may be described in conjunction with the example BT FEM circuitry 1904b (FIG. 19), although other circuitry configurations may also be suitable.

In some embodiments, the FEM circuitry 1904a may include a TX/RX switch 2002 to switch between transmit mode and receive mode operation. The FEM circuitry 1904a may include a receive signal path and a transmit signal path. The receive signal path of the FEM circuitry 1904a may include a low-noise amplifier (LNA) 2006 to amplify received RF signals 2003 and provide the amplified received RF signals 2007 as an output (e.g., to the radio IC circuitry 1906a-b (FIG. 19)). The transmit signal path of the circuitry 1904a may include a power amplifier (PA) to amplify input RF signals 2009 (e.g., provided by the radio IC circuitry 1906a-b), and one or more filters 2012, such as band-pass filters (BPFs), low-pass filters (LPFs) or other types of filters, to generate RF signals 2015 for subsequent transmission (e.g., by one or more of the antennas 1901 (FIG. 19)) via an example duplexer 2014.

In some dual-mode embodiments for Wi-Fi communication, the FEM circuitry 1904a may be configured to operate in either the 2.4 GHz frequency spectrum or the 5 GHz frequency spectrum. In these embodiments, the receive signal path of the FEM circuitry 1904a may include a receive signal path duplexer 2004 to separate the signals from each spectrum as well as provide a separate LNA 2006 for each spectrum as shown. In these embodiments, the transmit signal path of the FEM circuitry 1904a may also include a power amplifier 2010 and a filter 2012, such as a BPF, an LPF or another type of filter for each frequency spectrum and a transmit signal path duplexer 2004 to provide the signals of one of the different spectrums onto a single transmit path for subsequent transmission by the one or more of the antennas 1901 (FIG. 19). In some embodiments, BT communications may utilize the 2.4 GHz signal paths and may utilize the same FEM circuitry 1904a as the one used for WLAN communications.

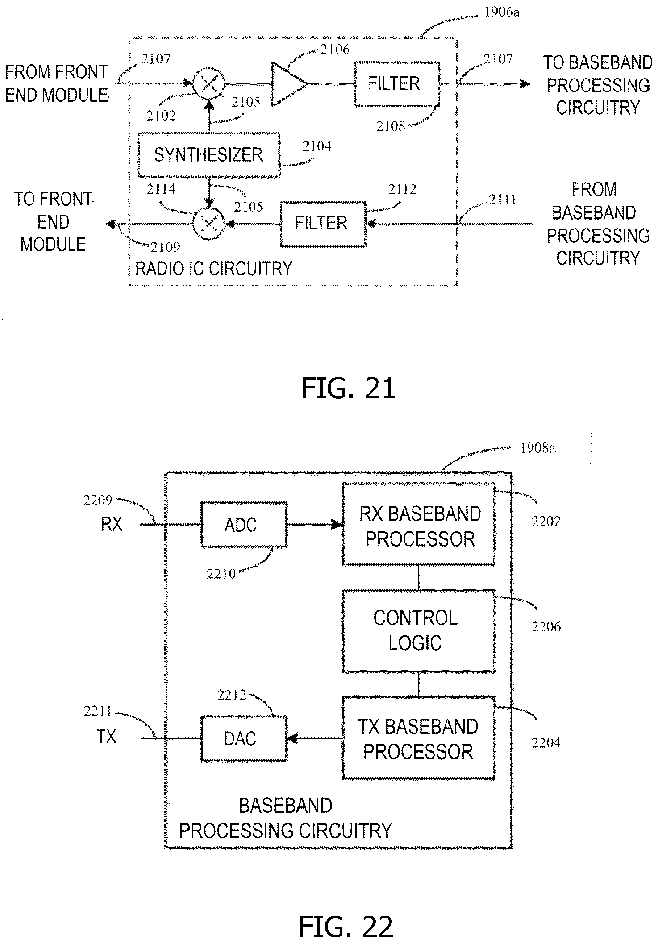

FIG. 21 illustrates radio IC circuitry 1906a in accordance with some embodiments. The radio IC circuitry 1906a is one example of circuitry that may be suitable for use as the WLAN or BT radio IC circuitry 1906a/1906b (FIG. 19), although other circuitry configurations may also be suitable. Alternatively, the example of FIG. 21 may be described in conjunction with the example BT radio IC circuitry 1906b.

In some embodiments, the radio IC circuitry 1906a may include a receive signal path and a transmit signal path. The receive signal path of the radio IC circuitry 1906a may include at least mixer circuitry 2102, such as, for example, down-conversion mixer circuitry, amplifier circuitry 2106 and filter circuitry 2108. The transmit signal path of the radio IC circuitry 1906a may include at least filter circuitry 2112 and mixer circuitry 2114, such as, for example, up-conversion mixer circuitry. Radio IC circuitry 1906a may also include synthesizer circuitry 2104 for synthesizing a frequency 2105 for use by the mixer circuitry 2102 and the mixer circuitry 2114. The mixer circuitry 2102 and/or 2114 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 21 illustrates only a simplified version of a radio IC circuitry, and may include, although not shown, embodiments where each of the depicted circuitries may include more than one component. For instance, mixer circuitry 2114 may each include one or more mixers, and filter circuitries 2108 and/or 2112 may each include one or more filters, such as one or more BPFs and/or LPFs according to application needs. For example, when mixer circuitries are of the direct-conversion type, they may each include two or more mixers.

In some embodiments, mixer circuitry 2102 may be configured to down-convert RF signals 2007 received from the FEM circuitry 1904a-b (FIG. 19) based on the synthesized frequency 2105 provided by synthesizer circuitry 2104. The amplifier circuitry 2106 may be configured to amplify the down-converted signals and the filter circuitry 2108 may include an LPF configured to remove unwanted signals from the down-converted signals to generate output baseband signals 2107. Output baseband signals 2107 may be provided to the baseband processing circuitry 1908a-b (FIG. 19) for further processing. In some embodiments, the output baseband signals 2107 may be zero-frequency baseband signals, although this is not a requirement. In some embodiments, mixer circuitry 2102 may comprise passive mixers, although the scope of the embodiments is not limited in this respect.

In some embodiments, the mixer circuitry 2114 may be configured to up-convert input baseband signals 2111 based on the synthesized frequency 2105 provided by the synthesizer circuitry 2104 to generate RF output signals 2009 for the FEM circuitry 1904a-b. The baseband signals 2111 may be provided by the baseband processing circuitry 1908a-b and may be filtered by filter circuitry 2112. The filter circuitry 2112 may include an LPF or a BPF, although the scope of the embodiments is not limited in this respect.

In some embodiments, the mixer circuitry 2102 and the mixer circuitry 2114 may each include two or more mixers and may be arranged for quadrature down-conversion and/or up-conversion respectively with the help of synthesizer 2104. In some embodiments, the mixer circuitry 2102 and the mixer circuitry 2114 may each include two or more mixers each configured for image rejection (e.g., Hartley image rejection). In some embodiments, the mixer circuitry 2102 and the mixer circuitry 2114 may be arranged for direct down-conversion and/or direct up-conversion, respectively. In some embodiments, the mixer circuitry 2102 and the mixer circuitry 2114 may be configured for super-heterodyne operation, although this is not a requirement.

Mixer circuitry 2102 may comprise, according to one embodiment: quadrature passive mixers (e.g., for the in-phase (I) and quadrature phase (Q) paths). In such an embodiment, RF input signal 2007 from FIG. 21 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 2105 of synthesizer 2104 (FIG. 21). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 2007 (FIG. 20) may comprise a balanced signal, although the scope of the embodiments is not limited in this respect. The I and Q baseband output signals may be provided to low-noise amplifier, such as amplifier circuitry 2106 (FIG. 21) or to filter circuitry 2108 (FIG. 21).

In some embodiments, the output baseband signals 2107 and the input baseband signals 2111 may be analog baseband signals, although the scope of the embodiments is not limited in this respect. In some alternate embodiments, the output baseband signals 2107 and the input baseband signals 2111 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 2104 may be a fractional-N synthesizer or a fractional N/N+1 synthesizer, although the scope of the embodiments is not limited in this respect as other types of frequency synthesizers may be suitable. For example, synthesizer circuitry 2104 may be a delta-sigma synthesizer, a frequency multiplier, or a synthesizer comprising a phase-locked loop with a frequency divider. According to some embodiments, the synthesizer circuitry 2104 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 2104 may be provided by a voltage controlled oscillator (VCO), although that is not a requirement. A divider control input may further be provided by either the baseband processing circuitry 1908a-b (FIG. 19) depending on the desired output frequency 2105. In some embodiments, a divider control input (e.g., N) may be determined from a look-up table (e.g., within a Wi-Fi card) based on a channel number and a channel center frequency as determined or indicated by the example application processor 1910. The application processor 1910 may include, or otherwise be connected to, one of the example secure signal converter 101 or the example received signal converter 103 (e.g., depending on which device the example radio architecture is implemented in).

In some embodiments, synthesizer circuitry 2104 may be configured to generate a carrier frequency as the output frequency 2105, while in other embodiments, the output frequency 2105 may be a fraction of the carrier frequency (e.g., one-half the carrier frequency, one-third the carrier frequency). In some embodiments, the output frequency 2105 may be a LO frequency (fLO).

FIG. 22 illustrates a functional block diagram of baseband processing circuitry 1908a in accordance with some embodiments. The baseband processing circuitry 1908a is one example of circuitry that may be suitable for use as the baseband processing circuitry 1908a (FIG. 19), although other circuitry configurations may also be suitable. Alternatively, the example of FIG. 21 may be used to implement the example BT baseband processing circuitry 1908b of FIG. 19.

The baseband processing circuitry 1908a may include a receive baseband processor (RX BBP) 2202 for processing receive baseband signals 2109 provided by the radio IC circuitry 1906a-b (FIG. 19) and a transmit baseband processor (TX BBP) 2204 for generating transmit baseband signals 2111 for the radio IC circuitry 1906a-b. The baseband processing circuitry 1908a may also include control logic 2206 for coordinating the operations of the baseband processing circuitry 1908a.

In some embodiments (e.g., when analog baseband signals are exchanged between the baseband processing circuitry 1908a-b and the radio IC circuitry 1906a-b), the baseband processing circuitry 1908a may include ADC 2210 to convert analog baseband signals 2209 received from the radio IC circuitry 1906a-b to digital baseband signals for processing by the RX BBP 2202. In these embodiments, the baseband processing circuitry 1908a may also include DAC 2212 to convert digital baseband signals from the TX BBP 2204 to analog baseband signals 2211.

In some embodiments that communicate OFDM signals or OFDMA signals, such as through baseband processor 1908a, the transmit baseband processor 2204 may be configured to generate OFDM or OFDMA signals as appropriate for transmission by performing an inverse fast Fourier transform (IFFT). The receive baseband processor 2202 may be configured to process received OFDM signals or OFDMA signals by performing an FFT. In some embodiments, the receive baseband processor 2202 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 19, in some embodiments, the antennas 1901 (FIG. 19) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1901 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: process an extended long range signal (ELR-SIG) field for the ELR physical layer convergence protocol data unit (PPDU); duplicate the ELR-SIG field in the frequency domain; and encode the ELR-SIG field utilizing binary convolutional coding (BCC).

Example 2 may include the device of example 1 and/or some other example herein, wherein the BCC may be with a ½ rate.

Example 3 may include the device of example 1 and/or some other example herein, wherein the processing circuitry may be further configured to process a user info field design in an ultra high reliability signal (UHR-SIG) for non-ELR PPDU.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send a frame.

Example 6 may include a non-transitory computer-readable medium storing computer-executable instructions which when executed by one or more processors result in performing operations comprising: processing an extended long range signal (ELR-SIG) field for the ELR physical layer convergence protocol data unit (PPDU); duplicating the ELR-SIG field in the frequency domain; and encoding the ELR-SIG field utilizing binary convolutional coding (BCC).

Example 7 may include the non-transitory computer-readable medium of example 6 and/or some other example herein, wherein the BCC may be with a ½ rate.

Example 8 may include the non-transitory computer-readable medium of example 6 and/or some other example herein, wherein the operations further comprise processing a user info field design in an ultra high reliability signal (UHR-SIG) for non-ELR PPDU.

Example 9 may include a method comprising: processing an extended long range signal (ELR-SIG) field for the ELR physical layer convergence protocol data unit (PPDU); duplicating the ELR-SIG field in the frequency domain; and encoding the ELR-SIG field utilizing binary convolutional coding (BCC).

Example 10 may include the method of example 9 and/or some other example herein, wherein the BCC may be with a ½ rate.

Example 11 may include the method of example 9 and/or some other example herein, further comprising processing a user info field design in an ultra high reliability signal (UHR-SIG) for non-ELR PPDU.

Example 12 may include an apparatus comprising means for: processing an extended long range signal (ELR-SIG) field for the ELR physical layer convergence protocol data unit (PPDU); duplicating the ELR-SIG field in the frequency domain; and encoding the ELR-SIG field utilizing binary convolutional coding (BCC).

Example 13 may include the apparatus of example 12 and/or some other example herein, wherein the BCC may be with a ½ rate.

Example 14 may include the apparatus of example 12 and/or some other example herein, further comprising processing a user info field design in an ultra high reliability signal (UHR-SIG) for non-ELR PPDU.

Example 15 may include a device comprising processing circuitry coupled to storage, the processing circuitry configured to: transmit extended long range SIGNAL (ELR-SIG) fields with a predetermined modulation and coding scheme (MCS) and duplicated in the frequency domain for extended range; apply a half-rate binary convolutional coding (BCC) encoding scheme; and configure the ELR-SIG fields to include PHY identification and directional signaling.

Example 16 may include the device of example 15 and/or some other example herein, wherein the processing circuitry may be further configured to indicate a user high rate (UHR) Extended Long Range (ELR) PHY version with a specific two-bit value.

Example 17 may include the device of example 15 and/or some other example herein, wherein the processing circuitry may be further configured to encode the ELR-SIG fields with settings for bandwidth to denote 20MHz operation.

Example 18 may include the device of example 15 and/or some other example herein, further comprising a transceiver configured to transmit and receive wireless signals.

Example 19 may include the device of example 18 and/or some other example herein, further comprising an antenna coupled to the transceiver to cause to send a frame.

Example 20 may include a non-transitory computer-readable medium storing computer-executable instructions which when executed by one or more processors result in performing operations comprising: transmitting extended long range SIGNAL (ELR-SIG) fields with a predetermined modulation and coding scheme (MCS) and duplicated in the frequency domain for extended range; applying a half-rate binary convolutional coding (BCC) encoding scheme; and configuring the ELR-SIG fields to include PHY identification and directional signaling.

Example 21 may include the non-transitory computer-readable medium of example 20 and/or some other example herein, wherein the operations further comprise indicate a user high rate (UHR) Extended Long Range (ELR) PHY version with a specific two-bit value.

Example 22 may include the non-transitory computer-readable medium of example 20 and/or some other example herein, wherein the operations further comprise encoding the ELR-SIG fields with settings for bandwidth to denote 20MHz operation.

Example 23 may include a method comprising: transmitting extended long range SIGNAL (ELR-SIG) fields with a predetermined modulation and coding scheme (MCS) and duplicated in the frequency domain for extended range; applying a half-rate binary convolutional coding (BCC) encoding scheme; and configuring the ELR-SIG fields to include PHY identification and directional signaling.

Example 24 may include the method of example 23 and/or some other example herein, further comprising indicate a user high rate (UHR) Extended Long Range (ELR) PHY version with a specific two-bit value.

Example 25 may include the method of example 23 and/or some other example herein, further comprising encoding the ELR-SIG fields with settings for bandwidth to denote 20MHz operation.

Example 26 may include an apparatus comprising means for: transmitting extended long range SIGNAL (ELR-SIG) fields with a predetermined modulation and coding scheme (MCS) and duplicated in the frequency domain for extended range; applying a half-rate binary convolutional coding (BCC) encoding scheme; and configuring the ELR-SIG fields to include PHY identification and directional signaling.

Example 27 may include the apparatus of example 26 and/or some other example herein, further comprising indicate a user high rate (UHR) Extended Long Range (ELR) PHY version with a specific two-bit value.

Example 28 may include the apparatus of example 26 and/or some other example herein, further comprising encoding the ELR-SIG fields with settings for bandwidth to denote 20MHz operation.

Example 29 may include one or more non-transitory computer-readable media comprising instructions to cause an electronic device, upon execution of the instructions by one or more processors of the electronic device, to perform one or more elements of a method described in or related to any of examples 1-28, or any other method or process described herein.

Example 30 may include an apparatus comprising logic, modules, and/or circuitry to perform one or more elements of a method described in or related to any of examples 1-28, or any other method or process described herein.

Example 31 may include a method, technique, or process as described in or related to any of examples 1-28, or portions or parts thereof.

Example 32 may include an apparatus comprising: one or more processors and one or more computer readable media comprising instructions that, when executed by the one or more processors, cause the one or more processors to perform the method, techniques, or process as described in or related to any of examples 1-28, or portions thereof.

Example 33 may include a method of communicating in a wireless network as shown and described herein.

Example 34 may include a system for providing wireless communication as shown and described herein.

Example 35 may include a device for providing wireless communication as shown and described herein.

In accordance with Table 36-28 of Draft P802.11be_D4.0 the following definitions are applicable herein, unless indicated otherwise:

UL/DL field Indicates whether the PPDU is sent in UL or DL. It is set to the TXVECTOR parameter UPLINK_FLAG. A value of 1 indicates the PPDU is addressed to an AP. A value of 0 indicates the PPDU is addressed to a non-AP STA.

BSS Color field indicates an identifier of the BSS. It is set to the TXVECTOR parameter BSS_COLOR.

TXOP field indicates: If the TXVECTOR parameter TXOP_DURATION is UNSPECIFIED, it is set to 127 to indicate the absence of duration information. If the TXVECTOR parameter TXOP_DURATION is an integer value, it is set to a value less than 127 to indicate duration information for NAV setting and protection of the TXOP as follows: If the TXVECTOR parameter TXOP_DURATION is less than 512, set to 2x [TXOP_DURATION / 8]; Otherwise, it is set to 2x [ (TXOP_DURATION -512) / 128] + 1.

CRC field indicates CRC for bits 0-41 of the U-SIG field. Bits 0-41 of the U-SIG field correspond to bits 0-25 of the U-SIG-1 field followed by bits 0-15 of the U-SIG-2 field. The CRC computation uses the same polynomial as that in 27.3.11.7.3 (CRC computation).

Tail field is used to terminate the trellis of the convolutional decoder. Set to 0.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subj ect-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device, the device comprising processing circuitry coupled to storage, the processing circuitry configured to:
generate, for transmission, a physical convergence protocol data unit, PPDU, for an enhanced long range, ELR, operation within an IEEE 802.11 network, wherein the PPDU comprises a 48-bit ELR signal, ELR-SIG, field comprising a first 24-bit part and a second 24-bit part, wherein the first part comprises a first cyclic redundancy check, CRC field; and
provide the generated PPDU to a transceiver for transmission.

2. The device of claim 1, wherein the ELR-SIG field further comprises an LDPC extra symbol field indicating the presence of an LDPC extra symbol.

3. The device of claim 1 or 2, wherein the first part of the ELR-SIG field further comprises a version identifier field.

4. The device of any one of claims 1 to 3, wherein the second part of the ELR-SIG field comprises a station identifier, STA-ID, field.

5. The device of any one of claims 1 to 4, wherein the processing circuitry is configured to encode the first and second parts of the ELR-SIG field using Binary Convolutional Coding, BCC.

6. The device of any one of claims 1 to 5, wherein the first part of the ELR-SIG field comprises a 1-bit uplink/downlink, UL/DL, a 1-bit modulation and coding scheme, MCS, a 1-bit coding, and a 9-bit length fields.

7. The device of any one of claims 1 to 6, wherein the processing circuitry is configured to duplicate the modulated ELR-SIG field in the frequency domain across four 52-tone resource units, RRUs.

8. The device of any one of claims 1 to 7, wherein the first part of the ELR-SIG field and the second part of the ELR-SIG field each comprise 24 uncoded bits.

9. A method comprising:
generating, for transmission, a physical convergence protocol data unit, PPDU, for an enhanced long range, ELR, operation within an IEEE 802.11 network, wherein the PPDU comprises a 48-bit ELR signal, ELR-SIG, field comprising a first 24-bit part and a second 24-bit part, wherein the first part comprises a first cyclic redundancy check, CRC field; and
providing the generated PPDU to a transceiver for transmission.

10. A computer-readable medium comprising instructions which, if executed by a processor, cause the processor to perform the method of claim 9.

11. A device, the device comprising processing circuitry coupled to storage, the processing circuitry configured to:
receive, from an IEEE 802.11 network, a physical layer convergence protocol data unit, PPDU, for an enhanced long range, ELR, operation, wherein the PPDU comprises a 48-bit ELR signal, ELR-SIG, field comprising a first 24-bit part and a second 24-bit part, and
wherein the first part comprises a first cyclic redundancy check, CRC, field; and
provide the received PPDU for further processing.

12. The device of claim 11, wherein the ELR-SIG field further comprises an LDPC extra symbol field indicating the presence of an LDPC extra symbol.

13. The device of claim 11 or 12, wherein the first part of the ELR-SIG field comprises a 1-bit uplink/downlink, UL/DL, a 1-bit modulation and coding scheme, MCS, a 1-bit coding, and a 9-bit length fields.

14. A method comprising:
receiving, from an IEEE 802.11 network, a physical layer convergence protocol data unit, PPDU, for an enhanced long range, ELR, operation, wherein the PPDU comprises a 48-bit ELR signal, ELR-SIG, field comprising a first 24-bit part and a second 24-bit part, and
wherein the first part comprises a first cyclic redundancy check, CRC, field; and
providing the received PPDU for further processing.

15. A computer-readable medium comprising instructions which, if executed by a processor, cause the processor to perform the method of claim 14.
